# EUROPÄISCHE PATENTANMELDUNG

(11) **EP 4 180 116 A1**
(43) Veröffentlichungstag der Anmeldung: **17.05.2023**
(21) Anmeldenummer: 22205406.6
(22) Anmeldetag: 03.11.2022
(51) Int. Cl.: B01D 63/02, B01D 65/10, B01D 67/00, F16J 15/02, F16J 15/06

(54) **DICHTADAPTER MIT EINEM KONTUR-DICHTELEMENT ZUR FILTERBAUGRUPPEN-ADAPTIERUNG FÜR EINE FUNKTIONSPRÜFUNG VON HOHLFASER-FILTERMODULEN**

(30) Priorität: 10.11.2021 DE 102021129241
(71) Anmelder: B. Braun Avitum AG, 34212 Melsungen (DE)
(72) Erfinder: TSCHENTSCHER, Steffen, 01129 Dresden (DE)
(74) Vertreter: Winter, Brandl - Partnerschaft mbB

(57) **Zusammenfassung**

Ein Dichtadapter (10) zur fluiddichten Adaptierung einer Filterbaugruppe (31) für eine Funktionsprüfung von Hohlfaser-Filtermodulen (30) in einer fertigungstechnischen Prüf-/Trocknungseinrichtung (100) hat: einen Adapter-Grundkörper (11) mit einem, an hinsichtlich einer Axialachse (z) des Dichtadapters (10) gegenüberliegenden Enden geöffneten, Lumen (15) zur Ausbildung eines Strömungsweges von der Filterbaugruppe (31) in der Prüf-/Trocknungseinrichtung (100) und ein elastisches Kontur-Dichtelement (20). Bei Aufbringen einer axialen Andruckkraft (F) in der Axialachse (z) liegen das elastische Dichtelement (20) und eine Filterbaugruppen-Stirnseite in einem dichtenden Kontaktbereich (K) fluiddicht aneinander an. Dabei ist das elastische Dichtelement (20) als ein Kontur-Dichtelement (20) mit einem konvexen ersten Kontur-Dichtabschnitt (21) und zumindest einem, zu dem ersten Kontur-Dichtabschnitt (21) radial (x, y) erweiterten und in der Axialachse (z) um einen Axialversatz (h) versetzten, konvexen zweiten Kontur-Dichtabschnitt (22) derart ausgeformt, dass der Kontaktbereich (K) fallweise entweder durch den ersten Kontur-Dichtabschnitt (21) als eine erste Dichtkontur (K1) für eine anliegende erste Filterbaugruppe einer ersten Baugröße oder durch den zweiten Kontur-Dichtabschnitt (22) als eine zweite Dichtkontur (K2) für eine anliegende zweite Filterbaugruppe (31) einer anderen zweiten Baugröße ausgebildet ist.

## Beschreibung

### Technisches Gebiet

Die vorliegende Offenbarung betrifft einen Dichtadapter mit einem Kontur-Dichtelement zur (universellen) Filterbaugruppen-Adaptierung für eine Funktionsprüfung von Hohlfaser-Filtermodulen in einer fertigungstechnischen Prüf- und/oder Trocknungseinrichtung. Ferner werden eine zugehörige Prüf-/Trocknungseinrichtung mit dem offenbarungsgemäßen (Kontur-) Dichtadapter und ein zugehöriges Verfahren zur Prüfung und/oder Trocknung (bzw. Herstellung) von Hohlfaser-Filtermodulen unter Verwendung des offenbarungsgemäßen (Kontur-) Dichtadapters vorgeschlagen.

(Hohlfaser-) Filtermodule (bzw. Filterkartuschen, Hohlfaser-Dialysatoren) zur Verwendung bei einer extrakorporalen Blutreinigung, insb. Dialyse, sind allgemein bekannt. Ein bekanntes Filtermodul weist ein Bündel semipermeabler Hohlfasern auf, welches in einem rohrförmigen Gehäuse mit zwei Gehäuseendstücken in dessen Längsrichtung geführt ist. Eine erste Flüssigkeit (insb. Blut) fließt durch die Hohlfasern, während eine zweite Flüssigkeit (insb. Dialysierflüssigkeit, Dialysat) an einer Außenseite der Hohlfasern fließt. Die Flüssigkeiten fließen jeweils durch getrennte Einlässe in das Filtermodul hinein und durch ebenfalls getrennte Auslässe aus dem Filtermodul heraus. Die semipermeablen Hohlfasern wirken dabei als (Dialyse-) Membran.

Die Hohlfasern sind in dem Gehäuse im Bereich der zwei Gehäuseendstücke mittels einer Vergussmasse derart vergossen, dass die Vergussmasse eine dichte (Flüssigkeitsraum-)Trennung zwischen dem Bereich der ersten Flüssigkeit und dem Bereich der zweiten Flüssigkeit darstellt. Sprich, es entsteht jeweilig eine stoffschlüssige Verbindung (insb. Verklebungsstelle) zwischen der Vergussmasse und einer Innenwandung des (jeweiligen) Gehäuseendstückes sowie einem Hohlfaser-Außendurchmesser und der Vergussmasse.

Die vorliegende Offenbarung betrifft einen Dichtadapter, wie er zur fertigungstechnischen Funktionsprüfung (bzw. als Faserleckagetest, Qualitätskontrollstation) von Hohlfaser-Dialysatoren in einer Prüf- und Trocknungseinrichtung eingesetzt wird, bevor die Blutanschlusskappen (zur Endmontage) montiert werden.

Dazu wird der Dichtadapter auf das Hohlfaser-Filtermodul (in Längsrichtung) aufgepresst (insb. durch einen Pneumatikzylinder), um sodann ein Prüfmedium (insb. Wasser) durch die Fasern zu leiten. Danach müssen die Fasern durch ein Trocknungsmedium (insb. heißer Luft bei ca. 100°C) getrocknet werden. Demnach besteht die technische Anforderung, dass der Dichtadapter luft- und flüssigkeitsdicht abschließt.

### Stand der Technik

Beispielsweise die Druckschrift WO 2014/128306 A1 betrifft eine bekannte Prüf- und Trocknungseinrichtung zur Funktionsprüfung von Hohlfaser-Dialysatoren mit einer eine Luftströmung erzeugenden Einrichtung, wenigstens einer Medienquelle und mindestens einer Fördereinrichtung. Wie darin offenbart, beginnt der Fertigungsprozess von Hohlfaser-Dialysatoren mit dem Einzug des Hohlfaserbündels in das Dialysatorgehäuse. Bei der anschließenden Faserversiegelung werden die offenen Hohlfaserenden verschlossen, um ein Füllen der Hohlfasern mit dem Vergussmittel zu verhindern. Im darauffolgenden Schritt werden die (Gehäuse-) endseitigen bzw. stirnseitigen Vergusskappen montiert. Nach dem Aushärten werden die Vergusskappen abgestreift und der Vergussblock mit mehreren Schneidevorgängen (schrittweise) soweit gekürzt, bis die offenen Hohlfasern sichtbar sind. Somit ist eine stirnseitig geschnittene Filterbaugruppe entstanden. Die stirnseitig geschnittene Filterbaugruppe bzw. das Faserbündel wird nach einer visuellen Kontrolle der Schnittflächen in einem anschließenden Prüfprozess auf defekte Fasern untersucht. Für eine Nassdichteprüfung wird der Hohlfaser-Dialysator mit Wasser als Prüfmedium gefüllt und einer Funktionsprüfung in Weise einer Druckprüfung unterzogen. Hohlfaser-Dialysatoren, die die Druckprüfung als Qualitätskontrolle bestanden haben, werden einem folgenden Trocknungsprozess, insb. einer Heißlufttrocknung, ausgesetzt.

Zur Funktionsprüfung einer Filterbaugruppe bspw. gemäß WO 2014/128306 A1 in Form einer Nassdichteprüfung und einer Lufttrocknung werden (Gehäuse-) endseitige bzw. stirnseitige Adapter(kappen) anstelle der Blutanschlusskappen bzw. Endkappen (mit Anschlussstutzen) verwendet. Sprich, erst nach dem Trocknungsprozess werden die Blutanschlusskappen bzw. Endkappen jeweils endseitig montiert.

Zur Adaptierung (bzw. Konnektierung) der Filterbaugruppe (ohne montierte Endkappen) weist allgemein die Prüf- und Trocknungseinrichtung eine(n) erste(n) Adapter(kappe) und eine(n) zweite(n) Adapter(kappe) jeweils mit einem Anschluss für eine dichtende Verbindung mit dem Hohlfaser-Dialysator auf. Insb. ist der Anschluss der ersten Adapterkappe bzw. der zweiten Adapterkappe jeweilig ein Anschluss für eine Luftzufuhr(leitung), eine Medienzufuhr(leitung) oder eine Medienabfuhr(leitung) jeweils über ein Ventil.

Aus dem Stand der Technik bekannte Methoden zur luft- bzw. flüssigkeitsdichten Adaptierung/Konnektierung der stirnseitig geschnittenen Filterbaugruppe betreffen den Einsatz von einerseits Konus-Dichtadaptern (starres Dichtsystem) oder von andererseits O-Ring-Dichtadaptern (elastisches Dichtsystem).

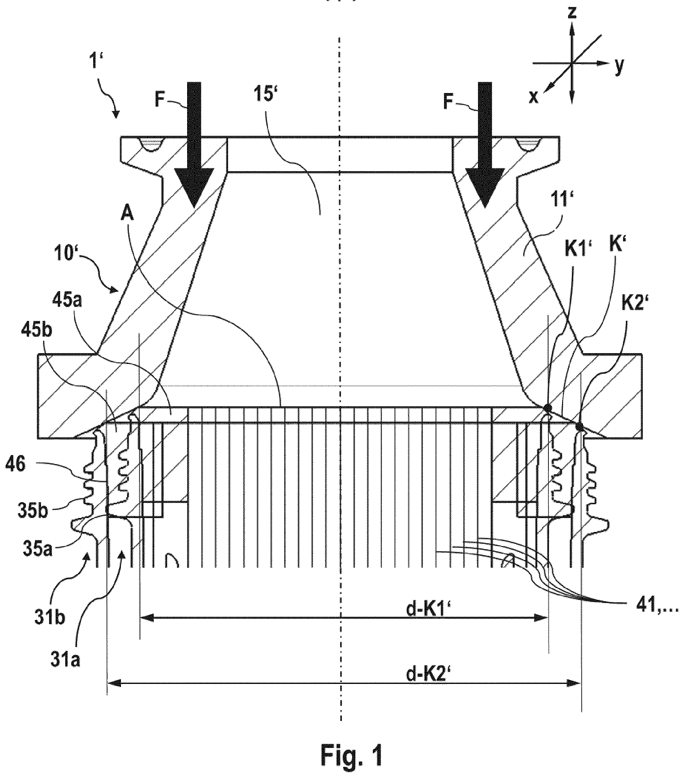

Zwar ist bei der Verwendung von einerseits Konus-Dichtadaptern (vgl. Figur 1) eine rüstfreie Konnektierung/Adaptierung von Filterbaugruppen unterschiedlicher Durchmesser bzw. Baugrößen möglich. Jedoch können aufgrund der starren umlaufenden Kontaktkontur in einem Konus-Kontaktbereich zwischen der Filterbaugruppe und dem Konus-Dichtadapter auftretende (axiale) Unebenheiten bzw. Höhenunterschiede, welche aus Schneidetoleranzen der stirnseitig, quer zur (Hohlfaser-) Längsrichtung bzw. Axialrichtung geschnittenen Filterbaugruppe resultieren, nicht kompensiert werden. Dabei können die zu kompensierenden (axialen) Höhenunterschiede der Filterbaugruppe ca. 0,1 bis 0,5 mm, insbesondere 0,15 bis 4mm, betragen. Demzufolge sind, um eine luft- bzw. flüssigkeitsdichte Konnektierung/Adaptierung zu erreichen, relativ hohe axial auf den Konus-Dichtadapter wirkende Zustellkräfte erforderlich. Diese führen im Zusammenspiel mit den (axialen) Unebenheiten in dem Konus-Kontaktbereich sowie mit dem zumeist aus einem harten Material (Metall, Duroplast, usw.) ausgebildeten Grundkörper des Konus-Dichtadapters zu hohen, partiell wirkenden, mechanischen Belastungen im Außenbereich der Filterbaugruppen.

Zudem erweist sich beim Konus-Dichtadapter als nachteilig, dass das gleichzeitige Auftreten von einer schrägen Kraftwirkung bzw. eines Andruckkraft-Quervektoranteils (d.h. quer zu einer Axialachse / Längsrichtung der Filterbaugruppe) sowie von Hitze bzw. einer thermischen Belastung besonders dazu beiträgt, dass mechanische Schädigungen / Materialermüden/-versagen in einem (Dicht-)Kontaktbereich zwischen dem Konus-Dichtadapter und der Filterbaugruppe, insb. auf einer dichtenden Stirnfläche einer Vergussmasse, und/oder an einer stoffschlüssigen Verbindungsstelle / Grenzfläche zwischen einem Gehäuseendstück und der Vergussmasse auftreten.

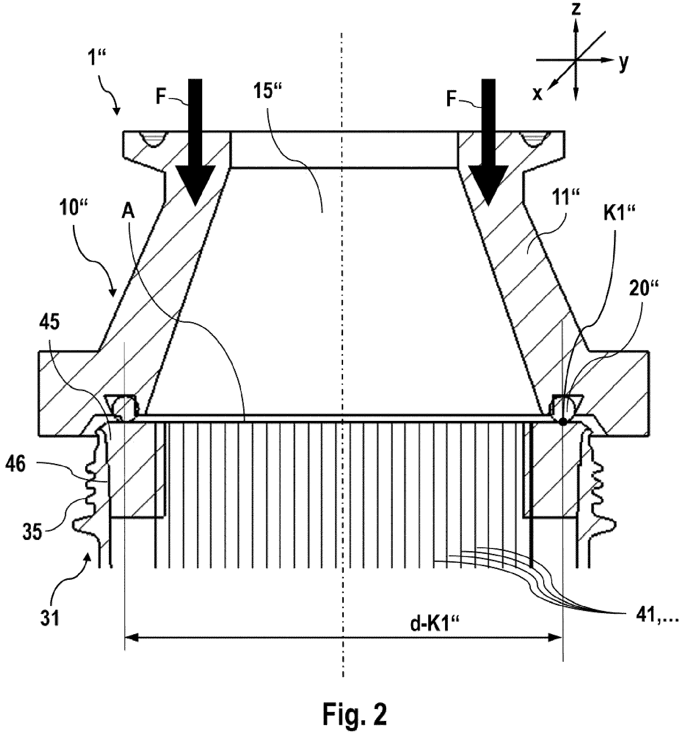

Bei der Verwendung von andererseits O-Ring-Dichtadaptern (vgl. Figur 2) ist nachteilig, dass keine rüstfreie Konnektierung/Adaptierung von stirnseitig geschnittenen Filterbaugruppen mit größeren Durchmesserunterschieden (bei unterschiedlichen Produkttypen bzw. Baugrößen) möglich ist. Insofern führt jede vorzunehmende Werkzeugumrüstung zu einem vielfach ungünstig erhöhten Aufwand (Engpass spezifisch qualifizierter Rüsttechniker, Komplexität Produktionsplanung, Kosten durch Rüststillstand) in der Herstellung. Weiter noch ist zusätzlich nachteilig, dass ein Positionierfehler der Filterbaugruppe zum Zeitpunkt der axialen Zustellung des O-Ring-Dichtadapters (sprich, wenn hinsichtlich einer relativen Lage der Filterbaugruppe sowie des O-Ring-Dichtadapters zueinander deren erforderliche Koaxialität nicht gegeben ist) zu einem unerwünschten «Herausdrehen» des im O-Ring-Dichtadapter vorgesehenen Dichtringes führen kann. In Folge ziehen aus der Dichtringnut des O-Ring-Dichtadaptern herausgesprungene Dichtringe zu hohe, punktuell wirkende, mechanische (Spitzen-)Belastungen nach sich. Nachteile ergeben sich hinsichtlich möglicher Anlagenstillstände bzw. hinsichtlich eines hohen prädiktiven Wartungsaufwandes / Ersatzteilbedarfes.

Insbesondere nachteilig können beide vorbekannten Methoden sowohl des Konus-Dichtadapters als auch des O-Ring-Dichtadapters zu sehr nachteiligen Beschädigungen, insb. zu Ablösungen, im Bereich bzw. an der Grenzfläche der stoffschlüssigen Verbindung zwischen der Vergussmasse und der Innenwandung des Gehäuseendstückes führen. Deren Entstehung wird ferner beim gleichzeitigen Wirken einer hohen thermischen Belastung (Wärmeeintrag) negativ begünstigt.

### Zusammenfassung der Offenbarung

In Anbetracht des vorstehend beschriebenen Stands der Technik soll die vorliegende Erfindung einen verbesserten gattungsgemäßen Dichtadapter bereitstellen, der die Nachteile des Stands der Technik überkommt. Dies wird durch einen (Kontur-) Dichtadapter mit einem integrierten oder ein-/ansetzbaren elastischen (Kontur-) Dichtelement zur universellen (fluiddichten) Filterbaugruppen-Adaptierung/- Konnektierung für eine Funktionsprüfung von Hohlfaser-Filtermodulen in einer fertigungstechnischen Prüf- und/oder Trocknungseinrichtung mit den Merkmalen des Anspruchs 1 sowie durch eine zugehörige mit dem offenbarungsgemäßen (Kontur-) Dichtadapter eingerichtete bzw. vorgesehene Prüf- und/oder Trocknungseinrichtung mit den Merkmalen des Anspruchs 17 sowie durch ein zugehöriges (Herstell-/Prüf-) Verfahren nach Anspruch 19 erreicht. Bevorzugte oder vorteilhafte Ausführungsformen der Offenbarung ergeben sich aus den Unteransprüchen, der nachfolgenden Beschreibung sowie den beigefügten Figuren.

Der offenbarungsgemäße (Kontur-) Dichtadapter ist zur (universellen) fluiddichten Filterbaugruppen-Adaptierung für eine Funktionsprüfung von Hohlfaser-Filtermodulen in einer (vorzugsweise fertigungstechnischen) Prüf-/Trocknungseinrichtung eingerichtet. Dabei weist der (Kontur-) Dichtadapter einen Adapter-Grundkörper und ein elastisches Dichtelement auf. Dabei ist das elastische Dichtelement in eine, der Filterbaugruppen-Stirnseite zugewandte, Dichtadapter-Stirnseite entlang eines Umfangs der Dichtadapter-Stirnseite integriert und/oder eingesetzt.

Der Adapter-Grundkörper weist ein inneres Lumen auf. Das Lumen ist an hinsichtlich einer Axialachse des Dichtadapters gegenüberliegenden Enden geöffnet. Dabei ist der (Kontur-) Dichtadapter eingerichtet, in der Axialachse an einer Filterbaugruppen-Stirnseite einer Filterbaugruppe, welche als das Hohlfaser-Filtermodul ohne montierte Blutanschlusskappen ausgebildet ist, in die bzw. in(nerhalb) der Prüf-/Trocknungseinrichtung derart angefügt bzw. angesetzt zu sein (bzw. zu werden), dass bei Aufbringen einer axialen Andruckkraft in der Axialachse, insbesondere durch die Prüf-/Trocknungseinrichtung, das elastische Dichtelement und die Filterbaugruppen-Stirnseite in einem dichtenden Kontaktbereich fluiddicht aneinander anliegen, um das Lumen als einen Strömungsweg von der Filterbaugruppe bzw. zwischen der Filterbaugruppe und der Prüf-/Trocknungseinrichtung auszubilden.

Dabei kann insbesondere zur (universellen) fluiddichten Filterbaugruppen-Adaptierung für eine Funktionsprüfung von Hohlfaser-Filtermodulen in einer (vorzugsweise fertigungstechnischen) Prüf-/Trocknungseinrichtung der (Kontur-) Dichtadapter eingerichtet sein, in der Axialachse zwischen der Filterbaugruppen-Stirnseite und einem Anschlussstück, welches mit einer Prüf-/Trocknungsmedium-Leitung der Prüf-/Trocknungseinrichtung verbunden und/oder verbindbar ist, derart eingefügt zu sein (bzw. zu werden), um das Lumen als den Strömungsweg bspw. für ein Trocknungsmedium zwischen der Filterbaugruppe und der Prüf-/Trocknungseinrichtung, insbesondere zwischen der Filterbaugruppe und dem Anschlussstück, auszubilden.

Offenbarungsgemäß ist das elastische Dichtelement als ein Kontur-Dichtelement ausgebildet. Dabei ist das Kontur-Dichtelement mit einem konvexen ersten Kontur-Dichtabschnitt und zumindest einem, zu dem ersten Kontur-Dichtabschnitt radial erweiterten und in der Axialachse um einen Axialversatz versetzten, konvexen zweiten Kontur-Dichtabschnitt derart ausgeformt, dass der Kontaktbereich fallweise entweder durch den ersten Kontur-Dichtabschnitt als eine erste Dichtkontur für eine anliegende erste Filterbaugruppe einer ersten Baugröße oder durch den zweiten Kontur-Dichtabschnitt als eine zweite Dichtkontur für eine anliegende zweite Filterbaugruppe einer anderen zweiten Baugröße ausgebildet ist.

Bei der Offenbarung handelt es sich also um einen, insb. in einer Fertigung zur Verwendung kommenden, Dichtadapter, der auf eine Filterbaugruppe eines Hohlfaser-Filtermoduls jeweils stirnseitig (anstelle einer stirnseitigen Blutanschluskappe des Hohlfaser-Filtermoduls) aufgesetzt / angesetzt wird, bevor die beiden Blutanschlusskappen befestigt/endmontiert, insb. aufgeschraubt, werden. Vor dem Befestigen / der Endmontage, insb. dem Aufschrauben der Blutanschlusskappen wird eine Hohlfaserfunktionsprüfung, insb. ein Hohlfaserleckagetest, durchgeführt. Dazu wird der Dichtadapter auf die Filterbaugruppe bzw. das Hohlfaser-Filtermodul ohne montierte Blutanschlusskappen angesetzt und sodann in dessen Längsrichtung aufgepresst (bspw. mittels eines Pneumatikzylinders), um ein Prüf-/Benetzungsmedium, insb. Wasser, durch die Hohlfasern leiten zu können. Nach erfolgter Hohlfaserfunktionsprüfung und in Vorbereitung / vor der Endmontage der zugehörigen Blutanschlusskappen auf die Filterbaugruppe können die Hohlfasern durch ein Trocknungsmedium, wie bspw. heiße Luft (ca. 100°C) oder überhitzten Dampf, (konvektions-)getrocknet werden. Insofern besteht ein Vorteil darin, dass durch den Dichtadapter ein höherer Volumenstrom des Trocknungsmediums, inbs. der heißen Luft, durch die Hohlfasern geleitet, insb. geblasen, werden kann, als mit montierten Blutanschlusskappen möglich wäre.

Demzufolge ist der Dichtadapter eingerichtet, um luft- und/oder flüssigkeitsdicht abzudichten bzw. eine luft- und/oder flüssigkeitsdichte Adaptierung / Konnektierung an die Filterbaugruppe auszubilden. Insbesondere sind die Begriffe "luftdicht" bzw. "flüssigkeitsdicht" im Sinne der technischen Rahmenvorgaben / Spezifikationen gemäß der Hohlfaserfunktionsprüfung, insb. des Hohlfaserleckagetests, zu verstehen. D.h. der Fachmann versteht, dass die Dichtwirkung schnell und in einer gegen einen an die Hohlfaser angelegten Druck ausreichenden Stärke eintreten und vorhalten / wirken muss. Demzufolge meinen diese Begriffe weniger eine langfristige / dauerhafte Dichtheit gegen die Diffusion einzelner Atome / Moleküle wie bspw. im Falle einer Verpackungsfolie oder dergleichen über längere Lagerzeiträume erforderlich.

Zunächst liegt ein wesentlicher Vorteil der vorliegenden Offenbarung darin, dass die Andruckkraft / Anpresskraft im Wesentlichen als eine Längskraft auf das offenbarungsgemäße Dichtsystem wirkt. Sprich, die Andruckkraft / Anpresskraft wird in einer Axialachse des (Kontur-)Dichtadapaters bzw. in Längsrichtung der Filterbaugruppe) aufgebracht, d.h. im Wesentlichen ohne schräge Kraftwirkung bzw. ohne einen Andruckkraft-Quervektoranteils. Dies dient vorteilhaft der Vermeidung einer signifikanten Ursache für mechanische Schädigungen in dem (Dicht-)Kontaktbereich zwischen dem Dichtadapter und der Filterbaugruppe, insb. auf deren dichtender Stirnfläche bzw. der Vergussmasse.

Ein weiterer wesentlicher Vorteil der vorliegenden Offenbarung ist aufgrund der Realisierung eines Universal-Dichtadapters gegeben. Insofern erlaubt die vorliegende Offenbarung die rüstfreie Verarbeitung von Filterbaugruppen unterschiedlicher Baugrößen, d.h. die Fertigung einschließlich der Qualitätskontrolle / Funktionsprüfung von Hohlfaser-Filtermodulen verschiedener Durchmesser, ohne dass die aufwendige Umrüstung der Prüf-/Trocknungseinrichtung auf unterschiedliche Dichtadapter bzw. Werkzeuge notwendig würde. Aus dem Wegfall der sonstigen Notwendigkeit zur Umrüstung bzw. von Umbauten am Prüf-/Teststand resultieren nennenswerte Vorteile hinsichtlich der Produktion sowie verbundener Kosten. So ergeben sich Verbesserungen aufgrund einer demzufolge flexibleren Fertigungsplanung bzw. eines vereinfachten Materialflusses (engl.: "Supply Chain"). Insbesondere wird eine wirtschaftliche Möglichkeit zu kleineren Chargengröße bereitgestellt, was vorteilhaft zum einen eine kostengünstige Reduktion gebundenen Kapitals in der Lagerhaltung sowie zum anderen Sonderchargen von weniger geläufigen Baugröße ermöglicht. Zudem bewirkt die Rüstfreiheit eine signifikant erhöhte mittlere Taktzahl bzw. Produktionsleistung / Marge.

In Weise eines synergistischen Vorteils kombiniert die vorliegende Offenbarung also eine Längskraft als Andruckkraft / Anpresskraft (ohne einen Andruckkraft-Quervektoranteil) mit der Möglichkeit, in der Weise eines universell für unterschiedlich große Filterbaugruppen verwendbaren (Kontur-)Dichtadapters rüstfrei / ohne Umrüstungen zu testen. Insofern dichten die zumindest zwei konvexen, vorzugsweise runden, Dichtabschnitte des (Kontur-)Dichtadapters verschiedene Dichtkontur-Durchmesser von Filterbaugruppen unterschiedlicher Baugröße ab. Mit anderen Worten, gelingt offenbarungsgemäß die rüstfreie Adaptierung/Konnektierung von Baugruppen eines durch eine Konturdichtungsgeometrie des Kontur-Dichtelementes definierten Dichtkontur-Durchmesserbereiches. Dabei umfasst die Konturdichtungsgeometrie zumindest zwei (oder mehrere) konvexe Kontur-Dichtabschnitte. Der erste und zumindest eine zweite Kontur-Dichtabschnitt sind untereinander in einem axial-zentralen Bereich, insb. stoffschlüssig, verbunden. Somit kann die Hohlfaserfunktionsprüfung, insb. der Hohlfaserleckagetest, vorteilhaft in einem Zug / ohne Rüstwechsel für eine Abfolge unterschiedlicher Produktchargen der Hohlfaser-Filtermodule der insb. in der der Fertigungslinie vorgesehenen Prüf-/Trocknungseinrichtung vorgenommen werden. Demzufolge entfallen Rüstzeiten und sind die Herstellkosten reduziert. Unterschiedlich große Produktchargen können insb. Dialysatoren mit unterschiedlichen Nenndurchmessern von 30 mm bis 60 mm betreffen, wobei im Falle von Sondermodulen bzw fallweise kleinere und/oder größere Durchmesser denkbar sind.

Offenbarungsgemäß wird die dichtende Kontur / Dichtkontur durch ein, einen elastischen Adaptierbereich an bzw. in einem (starren) Adapter-Grundkörper des Kontur-Dichtadapters stirnseitig ausbildendes, Kontur-Dichtelement erzeugt. Dabei ist das (elastische) Kontur-Dichtelement / der elastische Adaptierbereich vorgesehen bzw. ausgebildet / eingerichtet, um den Kontur-Dichtadapter (bzw. eine jeweilige Stirnseite von diesem) an die Filterbaugruppe (bzw. eine daran anliegende jeweilige Stirnseite von diesem) zu adaptieren / konnektieren. Insbesondere ist das (elastische) Kontur-Dichtelement / der elastische Adaptierbereich vorgesehen bzw. ausgebildet / eingerichtet, um den Kontur-Dichtadapter an zumindest zwei verschiedene Filterbaugruppe unterschiedlicher Baugröße, insb. unterschiedlicher Dichtkontur-Duchmesser, zu adaptieren / konnektieren.

Demzufolge ergibt sich ein noch weiterer Vorteil daraus, dass der elastische Adapterbereich im (Dicht-)Kontaktbereich zwischen der Filterbaugruppe und dem Dichtadapter auftretende Ebenheitsunterschiede bzw. axiale Unebenheiten ausgleichen kann, wodurch überhöhte, partiell bzw. punktuell als Belastungsspitzen auftretende / wirkende, Baugruppenbelastungen im Vorfeld verhindert werden.

Ein noch weiterer Vorteil, insbesondere gegenüber dem rüstfreien herkömmlichen Konus-Dichtadapter, kann ergibt sich daraus ergeben, dass das Material des elastischen Adaptierbereiches / Kontur-Dichtelements sich zumeist durch eine, gegenüber einem bspw. metallischen Material des starren Konus-Dichtadapters, reduzierte bzw. schlechtere Wärmeleitfähigkeit auszeichnet. Demzufolge sind der Wärmeeintrag und die thermische Belastung der Filterbaugruppe im Kontaktbereich des Dichtadapters bzw. im Bereich der dichtungsausprägenden Kontur positiv herabgesetzt.

Vorzugsweise, alternativ oder kumulativ, kann die erste Dichtkontur als ein erster Dichtkontur-Durchmesser und die zweite Dichtkontur als ein, gegenüber dem ein ersten Dichtkontur-Durchmesser äußerer bzw. radial erweiterter, zweiter Dichtkontur-Durchmesser, insbesondere konzentrisch, ausgebildet sein. Sprich, die erste bzw. zweite Dichtkontur liegt auf einem im Wesentlichen ringförmigen Umfang des ersten bzw. zweiten Kontur-Dichtabschnittes. Dies erleichtert die Anordnung des Kontur-Dichtelementes in dem Kontur-Dichtadapter sowie bei dessen Fertigung eine Entformung, bspw. aus einer Spitzgussmatritze.

Vorzugsweise, alternativ oder kumulativ, kann die äußere zweite Dichtkontur gegenüber der ersten Dichtkontur entlang der Axialachse um einen Axialversatz ferner von einem Longitudinalzentrum des Dichtadapters angeordnet sein. Dies ist vorteilhaft hinsichtlich der Verteilung / Einleitung der axialen Andruckkraft.

Vorzugsweise, alternativ oder kumulativ, kann die erste Dichtkontur und/oder die zweite Dichtkontur eine Schnittfläche der Filterbaugruppen-Stirnseite der Filterbaugruppe, welche eine Vielzahl, insbesondere ein Bündel, freigeschnittener Hohlfasern umfasst, außenumfänglich vollständig umschließen. Dieses Merkmal bewirkt den weiteren Vorteil, dass der offenbarungsgemäße Dichtadapter bzw. das Kontur-Dichtelement nur den äußersten Rand der Schnittfläche berührt und somit keinen die erforderliche Sterilität kompromittierenden Kontakt zum späteren Blutraum hat. Ferner erweist sich als Vorteil, dass alle freigeschnittenen/offenen Hohlfasern, welche im (Dialyse-)Betrieb des fertigen Hohlfasermoduls angeströmt bzw. durchströmt werden, dem Funktionstest, insbesondere Faserleckagetest / Benetzungstest / Kapillardrucktest unterzogen werden. Dies stellt vorteilhaft sicher, dass alle Hohlfasern getestet werden und nicht in einem Randbereich etwaig überständige defekte Hohlfasern aus der Funktionsprüfung unerwünscht herausfielen bzw. unberücksichtigt blieben.

Vorzugsweise, alternativ oder kumulativ, kann das Kontur-Dichtelement ausgebildet sein, entlang der ersten Dichtkontur und/oder der zweiten Dichtkontur gegen eine Vergussmasse, welche auf Seiten der Filterbaugruppen-Stirnseite zur stoffschlüssigen Verbindung der Vielzahl Hohlfasern an einem jeweiligen Gehäuseendstück vorgesehen ist, fluiddicht anzuliegen. Dieses Merkmal bewirkt den weiteren Vorteil, dass die Vergussmasse, bspw. Polyurethan, zusätzlich in Art einer elastischen Anliege- bzw. Dichtfläche wirkt, was einem negativen Einfluss der fertigungstechnisch bedingt zumeist nicht vollständig ebenen bzw. unebenen Schnittfläche des Bündels freigeschnittener/offener Hohlfasern (bspw. im Bereich von größergleich ca. 0,3 mm, bezogen auf eine axiale Richtung) auf das Dichtverhalten noch weiter günstig entgegenwirkt. Auf diese Weise kann eine der Vergussmasse implizite elastische Materialeigenschaft zusätzlich positiv zu etwaig entlang der ersten Dichtkontur und/oder der zweiten Dichtkontur auftretende axiale Unebenheiten dichtend ausgleichen.

Vorzugsweise, alternativ oder kumulativ, kann der Dichtadapter derart eingerichtet sein, dass jeweilig die erste Dichtkontur, insb. der erste Dichtkontur-Durchmesser, und/oder die zweite Dichtkontur, insb. der zweite Dichtkontur-Durchmesser, gleich oder größer ist als ein jeweilig zugehöriger erster und/oder zweiter Blutanschlusskappen-Dichtdurchmesser eines ersten bzw. zweiten Blutanschlusskappen-Dichtrings vorgesehen und eingerichtet sein. Dabei ist der jeweilige erste bzw. zweite Blutanschlusskappen-Dichtrings zur Dichtung der ersten bzw. zweiten Filterbaugruppe durch eine jeweilig zugehörige erste bzw. zweite Blutanschlusskappe in dem Hohlfaser-Filtermodul vorgesehen. Dieses optionale Merkmal berücksichtigt vorteilhaft konstruktive Aspekte hinsichtlich einer optimalen Kompatibilität, insbesondere hinsichtlich Konstruktionsgesichtspunkten der Statik und Festigkeitslehre.

Vorzugsweise, alternativ oder kumulativ, kann die erste Dichtkontur, vorzugsweise der erste Dichtkontur-Durchmesser, 38 mm bis 51 mm, insbesondere ca. 45 mm, bemessen. Vorzugsweise, alternativ oder kumulativ, kann die zweite Dichtkontur, vorzugsweise der zweite Dichtkontur-Durchmesser, 44 mm bis 65 mm, insbesondere ca. 53,4 mm, bemessen. Vorzugsweise, alternativ oder kumulativ, kann der Axialversatz 0,3 mm bis ca. 1 mm, insbesondere ca. 0,65 mm, bemessen. Vorzugsweise, alternativ oder kumulativ, kann ein Radialversatz, um welchen ein dem zweiten Kontur-Dichtabschnitt zugehöriger zweiter Mittelpunkt von einem dem ersten Kontur-Dichtabschnitt zugehörigen ersten Mittelpunkt radial versetzt ist, 2,5 mm bis 5mm, insbesondere ca. 3,7mm, bemessen. Vorzugsweise, alternativ oder kumulativ, kann eine lichte axiale Dichtelement-Höhe des Kontur-Dichtelements ca. 3 mm bis 6 mm, insbesondere ca. 4,3 mm, bemessen. Vorzugsweise, alternativ oder kumulativ, kann ein Innendurchmesser einer umfänglichen Innenfläche des Kontur-Dichtelements 34 mm bis 55 mm, insbesondere ca. 43,2 mm, bemessen. Vorzugsweise, alternativ oder kumulativ, kann ein Außendurchmesser einer umfänglichen Außenfläche des Kontur-Dichtelements 40 mm bis 69 mm, insbesondere ca. 56,2 mm, bemessen. Vorzugsweise, alternativ oder kumulativ, kann ein Rundkontur-Durchmesser, welcher von dem ersten Kontur-Dichtabschnitt und/oder von dem zumindest einen zweiten Kontur-Dichtabschnitt jeweilig konvex ausgeformt wird, 2 mm bis 4 mm, insbesondere ca. 2,8 mm, bemessen.

Vorzugsweise, alternativ oder kumulativ, kann das Kontur-Dichtelement mit zumindest einem weiteren konvexen dritten Kontur-Dichtabschnitt, welcher zu dem zweiten Kontur-Dichtabschnitt radial erweitert und in der Axialachse um einen weiteren Axialversatz versetzt ist, derart ausgeformt ist, dass der Kontaktbereich fallweise entweder durch den ersten Kontur-Dichtabschnitt als eine erste Dichtkontur für eine anliegende erste Filterbaugruppe einer ersten Baugröße oder durch den zweiten Kontur-Dichtabschnitt als eine zweite Dichtkontur für eine anliegende zweite Filterbaugruppe einer anderen zweiten Baugröße oder durch den dritten Kontur-Dichtabschnitt als eine dritte Dichtkontur für eine anliegende dritte Filterbaugruppe einer noch weiteren dritten Baugröße ausgebildet ist. Sprich, dieses Merkmal betrifft die Abwandlungsserie einer Konturdichtungsausführung mit sogar mehreren miteinander verbundenen, dichtungsausprägenden Kontur-Dichtabschnitten mit jeweiligem (bilateralen) Axialversatz zueinander. Demzufolge kann zwischen dreien bzw. gleich mehreren Filterbaugruppen unterschiedlicher Baugröße rüstfrei konnektiert/adaptiert werden.

Vorzugsweise, alternativ oder kumulativ, kann der Adapter-Grundkörper entlang des Umfangs der Dichtadapter-Stirnseite eine Nut ausbilden, welche eingerichtet ist, das Kontur-Dichtelement aufzunehmen und dieses unter Freilassung des dichtenden Kontaktbereiches, insbesondere formschlüssig, haltend weitgehend zu umschließen.

Vorzugsweise, alternativ oder kumulativ, kann ein Querschnitt der Nut zum Aufnehmen und Halten des Kontur-Dichtelements an der Dichtadapter-Stirnseite mittels zumindest einer die Freilassung verengenden Rastnase auf einer Seite oder beiden Seiten der Freilassung hinterschnitten ausgeformt sein. Insbesondere kann die Nut mit einem trapezförmigen Querschnitt ausgeformt sein. Dabei dient die spezifisch auf eine (gesamte) Außenkontur des Kontur-Dichtelements angepasste Nut vorteilhaft zu dessen einfachen Montage bzw. Demontage. Zudem ergibt sich eine gute Reinigungsfähigkeit.

Vorzugsweise, alternativ oder kumulativ, kann der Adapter-Grundkörper, insbesondere eine Grundfläche der Nut, entlang eines bzw. des Umfangs der Dichtadapter-Stirnseite eine Konturfuß-Nut ausbilden, welche eingerichtet ist, einen umfänglich ausgeformten, zu der Konturfuß-Nut korrespondierenden Konturfuß des eingesetzten Kontur-Dichtelements aufzunehmen, insbesondere formschlüssig zu halten. Dabei verhindert die spezielle Kontur des Konturfußes ein partielles Herauswölben und etwaiges 'Herausrollen' des Kontur-Dichtelements unter Last bzw. im Falle von Filterbaugruppen-Positionierungsfehlern zum Zeitpunkt der Adaptierung/Konnektierung.

Vorzugsweise, alternativ oder kumulativ, kann die jeweilige konvexe Ausformung des ersten Kontur-Dichtabschnitts und/oder des zumindest einen zweiten Kontur-Dichtabschnitts, auf den Querschnitt des Kontur-Dichtelements bezogen, eine im Wesentlichen runde Form; oder eine axial oder radial elongierte Form, insb. eine ovale oder rechteckige Form; oder eine freie Kontur-Form abbilden.

Vorzugsweise, alternativ oder kumulativ, kann das Kontur-Dichtelement aus zumindest einem elastischen Material aus der Klasse der Weich-Elastomere ausgebildet sein. Dabei betrifft ein Weich-Elastomer insb. einen Gummi, einen Synthesekautschuk wie Acrylnitril-Butadien-Kautschuk (NBR) und/oder ein Silikon. Damit ist gemeint, dass das elastische Material unter Verwendung zumindest eines Weich-Elastomeren, insb. unter Verwendung einer Kombination von Weichelastomeren, formuliert bzw. compoundiert ist. Dabei kann es weiter bevorzugt sein, dass die Zusammensetzung des elastischen Materials weitere Komponenten, insb. Additive und/oder Hilfsstoffe, umfasst.

Vorzugsweise, alternativ oder kumulativ, kann das Kontur-Dichtelement aus einem elastischen Material, insb. einem Weich-Elastomeren, mit einer Shore-Härte A im Bereich von 55 bis 100, weiter bevorzugt von 60 bis 90, insbesondere von 70 bis 80, ausgebildet sein.

Für die Bestimmung der Shore-Härte sind in der Norm DIN ISO 7619-1 (die hiermit durch Verweis ausdrücklich zum Bestandteil der vorliegenden Offenlegungsschrift gemacht wird) konkrete Vorgaben zur Durchführung der Messungen mit einem als Durometer bezeichneten Härteprüfer sowie für die Kalibrierung der Prüfgeräte festgelegt. Das Durometer weist einen dünnen Prüfstift aus gehärtetem Stahl auf, welcher mit definierter Federkraft in das zu prüfende Material gedrückt wird. Eine Eindringtiefe des Prüfstifts wird auf einer Skala von 0 Shore gemäß 2,5 mm Eindringtiefe bis 100 Shore gemäß 0 mm Eindringtiefe gemessen. Für die Prüfung von bevorzugten Weich-Elastomeren wird die Shore-Härte A eingesetzt. Hierbei wird ein Prüfgewicht von 1 kg für 15 s auf den Werkstoff gedrückt. Dazu ist der Prüfstift mit einer flachen Spitze mit 0,79 mm Durchmesser bei einem Öffnungswinkel von 35° ausgebildet.

Vorzugsweise, alternativ oder kumulativ, kann der erste Kontur-Dichtabschnitt eine von dem zweiten Kontur-Dichtabschnitt verschiedene Shore-Härte A aufweisen.

Vorzugsweise, alternativ oder kumulativ, kann das elastische Material ein spritzvergießbares Material und/oder einen Thermoplasten, insbesondere ein Flüssigsilikon [engl. "liquid silicone rubber (LSR)] und/oder ein Festsilikon [HochTemperatur-Vernetzend (HTV)], umfassen. Besonders bevorzugt kann der Dichtadapter und/oder das Kontur-Dichtelement, zumindest teilweise oder vollständig, als ein spritzgegossenes Teil ausgebildet sein. Besonders bevorzugt können der Adapter-Grundkörper des Dichtadapters und das Kontur-Dichtelement integral/einstückig in einem Zwei-/Mehrkomponenten-Spritzgußverfahren bzw. als ein zwei-/mehrkomponentiges Spitzgussteil ausgebildet sein.

Dabei bietet das (Ein- oder Mehrkomponenten-) Spritzgußverfahren vielfache Vorteile hinsichtlich einer kostengünstigen Serienfertigung von frei konturierten Bauteilen. Insbesondere ein (spitzgegossenes) Kontur-Dichtelement aus zumindest einem Flüssigsilikon bieten vielfache Vorteile hinsichtlich ihrer Materialbeständigkeit bzw. Inertheit. Insofern sind (Flüssig-) Silikone sehr (dauer)elastisch, chemikalien-, UV-, alterungs- und temperaturbeständig sowie hitzebeständig. Letztere Eigenschaft bietet einen besonderen Vorteil für die Beständigkeit vor dem Hintergrund der durch die Heißlufttrocknung entstehenden thermischen Materialbeanspruchung. Vorzugsweise, alternativ oder kumulativ, kann das elastische Material die Anforderungen der Biokompatibilität nach USP Class VI erfüllen.

Vorzugsweise, alternativ oder kumulativ, kann ein Elastizitätsmodul und/oder die Shore-Härte A und/oder eine Dimensionierung des Kontur-Dichtelements und/oder des zumindest einen zweiten Kontur-Dichtabschnitt so adaptiert sein, dass beim Aufbringen der axialen Andruckkraft in der Axialachse durch die Prüf-/Trocknungseinrichtung des zumindest einen zweiten Kontur-Dichtabschnitt um weniger als den Axialversatz komprimiert wird. Insbesondere wird dabei um einen Kompressionsweg komprimiert, welcher maximal 80 %, insbesondere maximal 60 %, des Axialversatzes beträgt. Dies wirkt vorteilhaft einem 'Durchdrücken' / 'Durchknallen' der auf dem zweiten Kontur-Dichtabschnitt 22 (d.h. bezogen auf die Dichtadapter-Stirnfläche, in Richtung aus dem Adapter-Grundkörper heraus: auf der erhöhten Außenkontur) aufliegenden zweiten Filterbaugruppe hindurch auf den ersten Kontur-Dichtabschnitt (d.h. bezogen auf die Dichtadapter-Stirnfläche, in den Adapter-Grundkörper hinein: auf die abgesenkte Innenkontur).

Ein zweiter Aspekt der vorliegenden Offenbarung betrifft eine Prüf- und/oder Trocknungseinrichtung, welche mit einem offenbarungsgemäßen (Kontur-) Dichtadapter mit den vorstehenden Merkmalen bzw. nach den vorstehenden bevorzugten Ausführungsformen eingerichtet ist. Dabei dient die Einrichtung der Prüf- und/oder Trocknungseinrichtung mit dem offenbarungsgemäßen (Kontur-) Dichtadapter der Funktionsprüfung von einer Filterbaugruppe im Rahmen einer fertigungstechnischen Qualitätskontrolle oder dergleichen, wie vorstehend bereits ausgeführt.

Vorzugsweise, alternativ oder kumulativ, kann die Prüf- und/oder Trocknungseinrichtung in Kombination mit einerseits dem (Kontur-) Dichtadapter an einer der beiden Filterbaugruppen-Stirnseiten und mit andererseits einem, aus dem Stand der Technik bekannten bzw. in der Einleitung beschriebenen, Konus-Dichtadapter an der gegenüberliegenden anderen Filterbaugruppen-Stirnseite eingerichtet sein. Dabei kann insbesondere, aber nicht limitierend, die eine Filterbaugruppen-Stirnseite diejenige Filterbaugruppen-Stirnseite mit der höheren mechanischen Belastung durch die Prüf- und/oder Trocknungseinrichtung betreffen.

Ein dritter Aspekt der vorliegenden Offenbarung betrifft ein Verfahren zur Herstellung eines Hohlfaser-Filtermoduls unter Verwendung einer Prüf- und/oder Trocknungseinrichtung nach dem zweiten Aspekt der vorliegenden Offenbarung. Das Verfahren umfasst (zunächst) einen Schritt eines Prüfens und/oder Trocknens einer, als das Hohlfaser-Filtermodul ohne montierte Blutanschlusskappen ausgebildeten, Filterbaugruppe in der Prüf- und/oder Trocknungseinrichtung; und einen nachfolgenden Schritt einer Endmontage der Blutanschlusskappen auf die Filterbaugruppe zu dem fertigen Hohlfaser-Filtermodul. Weitere Schritte können insbesondere solche betreffen, um die, vorstehend bereits beschriebene, Filterbaugruppe als Zwischenprodukt herzustellen, wie insb.: Aufsetzen von (beiden) Gehäuseendstücken auf einen Gehäusemittelteil eines Gehäuses der Filterbaugruppe; Einsetzen der Vielzahl / des Bündels Hohlfasern in das Gehäuse; Verschließen der Hohlfasern; Aufsetzen von Verguss-Deckeln auf die Gehäuseendstücke; Vergießen der Hohlfasern in dem Gehäuse mit der Vergussmasse; stirnseitiges Freischneiden/Kürzen der Hohlfasern zu offenen Hohlfasern bzw. der Gehäuseendstücke.

### Kurzbeschreibung der Figuren

Weitere Merkmale, Vorteile und Wirkungen der Erfindung ergeben sich aus der nachfolgenden Beschreibung bevorzugter Ausführungsbeispiele der Offenbarung sowie der beigefügten Figuren. Dabei zeigen:
Fig. 1 einen Längsschnitt durch ein starres Dichtsystem nach dem Stand der Technik mittels eines bekannten Konus-Dichtadapters zur luft- bzw. flüssigkeitsdichten Adaptierung/Konnektierung eines jeweiligen Endabschnitts einer stirnseitig geschnittenen Filterbaugruppe eines Hohlfaser-Filtermoduls vorab der Montage von dessen stirnseitigen Blutanschlusskappen, insb. die Möglichkeit des Dichtens von Filterbaugruppen unterschiedlicher Durchmesser bzw. Baugrößen veranschaulichend;
Fig. 2 einen Längsschnitt durch ein elastisches Dichtsystem nach dem Stand der Technik mittels eines bekannten O-Ring-Dichtadapters zur luft- bzw. flüssigkeitsdichten Adaptierung/Konnektierung eines jeweiligen Endabschnitts einer stirnseitig geschnittenen Filterbaugruppe eines Hohlfaser-Filtermoduls vorab der Montage von dessen stirnseitigen Blutanschlusskappen;

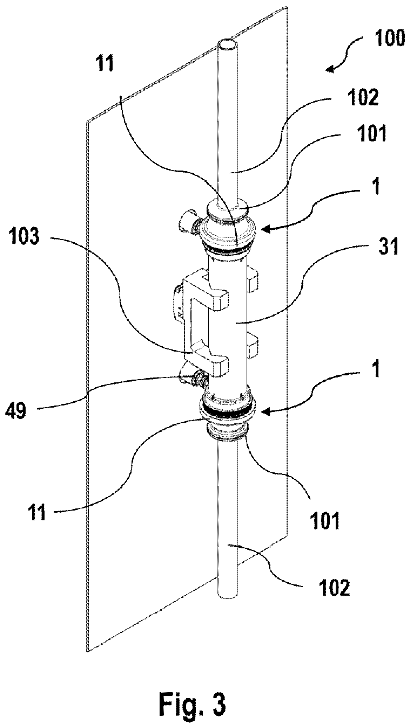

Fig. 3 eine perspektivische Vorderansicht (eines Ausschnitts) zur prinzipiellen Veranschaulichung einer Prüf-/Trocknungseinrichtung mit einer zu prüfenden/trocknenden Filterbaugruppe (ohne montierte stirnseitige Blutanschlusskappen), welche mittels zwei jeweiligen stirnseitigen offenbarungsgemäßen Dichtsystemen bzw. Dichtadaptern in der Prüf-/Trocknungseinrichtung adaptiert/konnektiert bzw. dichtend axial zur Prüf-/Trocknung eingespannt ist;

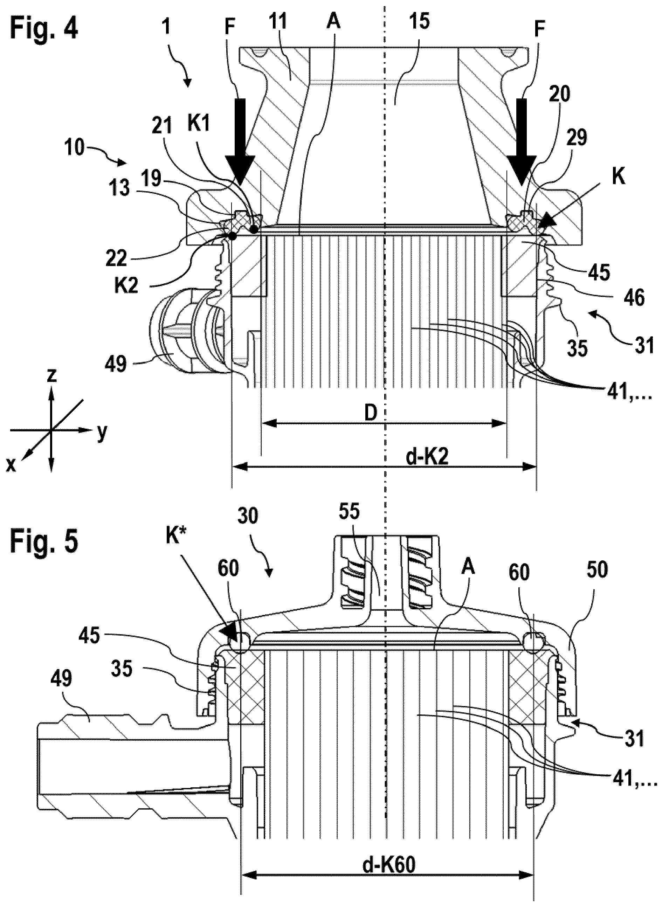

Fig. 4 einen Längsschnitt eines offenbarungsgemäßen Dichtadapters mit einem elastischen Kontur-Dichtelement gemäß einem ersten Ausführungsbeispiel der vorliegenden Offenbarung, die Ausbildung eines offenbarungsgemäßen elastischen Dichtsystems zur luft- bzw. flüssigkeitsdichten Adaptierung/Konnektierung eines jeweiligen Endabschnitts einer stirnseitig geschnittenen Filterbaugruppe eines Hohlfaser-Filtermoduls vorab der Montage von dessen stirnseitigen Blutanschlusskappen veranschaulichend;
Fig. 5 einen Längsschnitt eines jeweiligen Endabschnitts eines (fertigen) Hohlfaser-Filtermoduls mit stirnseitigen Blutanschlusskappen, d.h. nach deren Montage auf die, unter Bezugnahme auf Fig. 4 geprüfte/getrocknete, stirnseitig geschnittene Filterbaugruppe, insb. zur Veranschaulichung einer (radialen) Position des Kontur-Dichtelements der Fig. 4 gemäß dem ersten Ausführungsbeispiel der vorliegenden Offenbarung gegenüber einer (radialen) Position eines Blutanschlusskappen-Dichtrings, jeweils die stirnseitig geschnittene Filterbaugruppe umfassend;

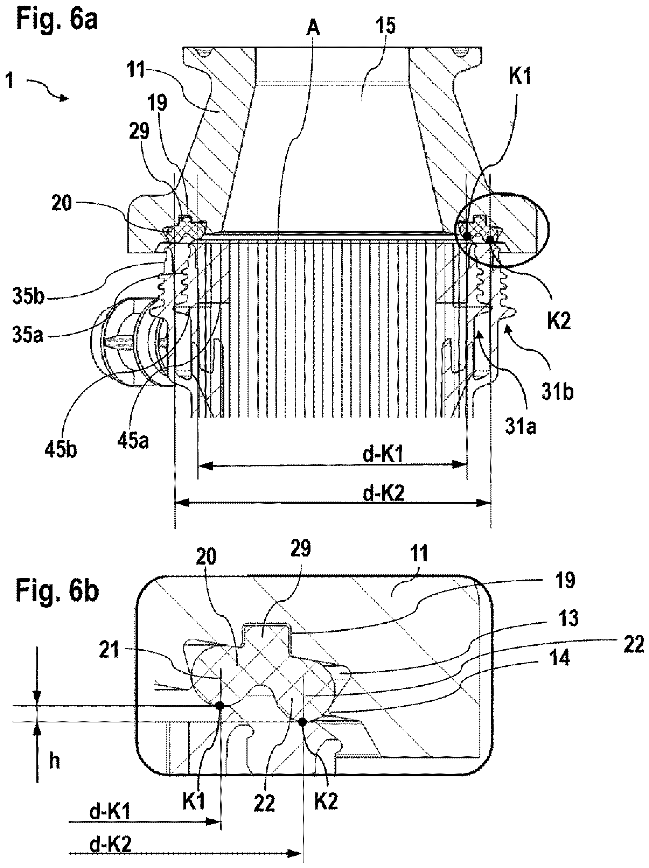

Fig. 6a eine abgewandelte Darstellung des Längsschnittes der Fig. 4 hinsichtlich des Dichtadapters mit dem elastischen Kontur-Dichtelement gemäß dem ersten Ausführungsbeispiel der vorliegenden Offenbarung, insb. die Möglichkeit des offenbarungsgemäßen Dichtens von Filterbaugruppen unterschiedlicher Durchmesser bzw. Baugrößen veranschaulichend;
Fig. 6b ein vergrößertes Detail der Fig. 6a;

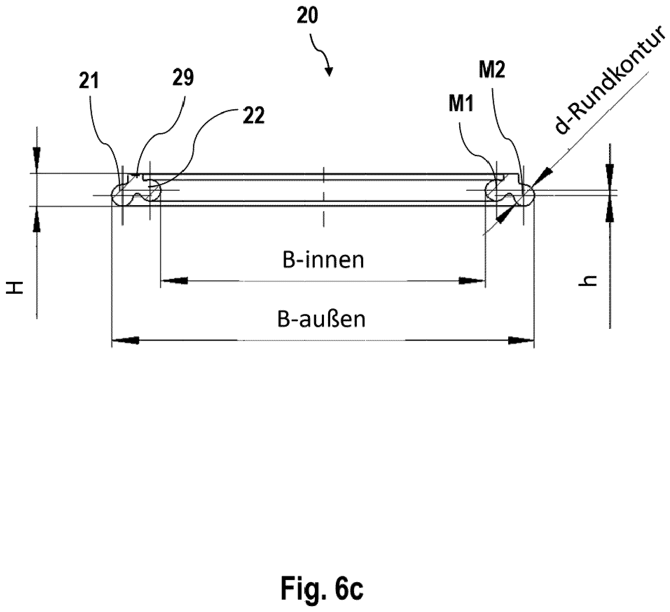

Fig. 6c einen Querschnitt durch das Kontur-Dichtelement gemäß dem ersten Ausführungsbeispiel der vorliegenden Offenbarung, eine im Wesentlichen doppelgerundete Konturform mit Axialversatz aufweisend;

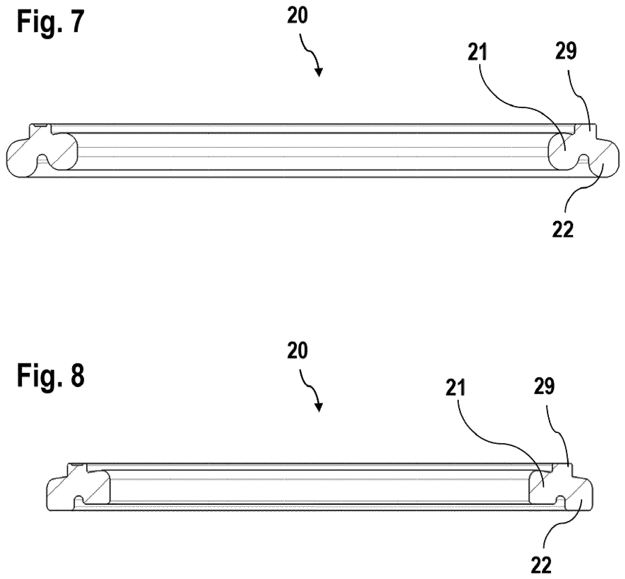

Fig. 7 einen Querschnitt durch ein Kontur-Dichtelement gemäß einem zweiten Ausführungsbeispiel der vorliegenden Offenbarung, eine im Wesentlichen ovale / elongierte Konturform mit Axialversatz aufweisend; und
Fig. 8 einen Querschnitt durch ein Kontur-Dichtelement gemäß einem dritten Ausführungsbeispiel der vorliegenden Offenbarung, eine im Wesentlichen rechteckige Konturform mit Axialversatz aufweisend.

### Beschreibung der Ausführungsbeispiele

Figuren 3 bis 6c offenbaren gemäß einem ersten Ausführungsbeispiel eines elastischen Dichtsystems 1 nach der vorliegenden Offenbarung einen Kontur-Dichtadapter 10 mit einem elastischen Kontur-Dichtelement 20. Wiederum Figuren 7 und 8 zeigen eine gegenüber dem ersten Ausführungsbeispiel jeweilig abgewandelte offenbarungsgemäße Konturform des elastischen Kontur-Dichtelements 20, nämlich gemäß einem zweiten bzw. dritten Ausführungsbeispiel.

Einführend veranschaulichen Fig. 1 bzw. Fig. 2 zunächst den Stand der Technik hinsichtlich der zwei grundsätzlich bekannten Dichtmethoden / Dichtsysteme 1' bzw. 1", wie diese zur Durchführung eines sogenannten Faserleckagetests / Benetzungstests / Kapillardrucktests als Funktionsprüfung / Prüfstation / Prüfschritt / Qualitätskontrolle innerhalb der Fertigung von Hohlfaser-Filtermodulen 30 (s. Fig. 5) bzw. Dialysatoren angewendet / verwendet werden. Dazu wird eine Filterbaugruppe 31 in einer als solchen bekannten Prüf- und/oder Trocknungseinrichtung (letztere hinsichtlich des Dichtsystems 1 der vorliegenden Offenbarung in Fig. 3 mit Bezugszeichen 100 dargestellt; vgl. bspw. Figuren 1 und 2 der ausdrücklich unter Verweis in die vorliegende Offenbarung miteinbezogenen Druckschrift WO 2014/128306 A1) hinsichtlich eines Prüf- und/oder Trocknungsmediums mittels eines betreffenden Dichtadapters 10' / 10" bzw. 10 (Figuren 3 und 4) fluiddicht angeordnet / eingerichtet bzw. an diese adaptiert / konnektiert.

Insb. stellt dabei die Filterbaugruppe 31 fertigungstechnisch ein Zwischenprodukt dar, d.h. das Hohlfaser-Filtermodul 30 vorab einer Endmontage von beiden stirnseitig vorzusehenden Blutanschlusskappen 50, wie in Fig. 5 in einem (end)montierten Zustand bzw. als ein (geprüftes / getrocknetes) Endprodukt zu sehen.

Insb. sollen eine Vielzahl / ein Bündel von Hohlfasern 41, 41, ... für die Funktionsprüfung bzw. den Faserleckagetest nass vorliegen bzw. zuvor benetzt werden. Dazu werden insb. die (bereits entlang der Fertigungslinie vergossenen und geschnittenen) Filterbaugruppen 31 der Hohlfaser-Filtermodule 30 bzw. Dialysatoren bspw. mit einem flüssigen Benetzungs-/Prüfmedium, insb. mit Wasser, gespült bzw. getestet, wonach sie optional (im Sinne eines fertigen Endproduktes) wieder getrocknet werden. Sprich, insb. werden die Hohlfaser-Filtermodule 30 bzw. Dialysatoren ohne Blutanschlusskappen in einer Adaptierung bzw. Prüfeinrichtung, vorzugsweise in einer kombinierten Prüf- und/oder Trocknungseinrichtung (in Figur 3 mit Bezugszeichen 100), gespült, getestet und optional wieder getrocknet. Die Prüfung/Trocknung der Filterbaugruppen 31 hat den Vorteil, dass das (Konvektions-) Trocknen, insb. mit heißer Luft, ohne die (end)montierten Blutanschlusskappen 50 technologisch deutlich effektiver ist.

Gemäß einem grundsätzlichen Aufbau weist das Hohlfaser-Filtermodul 30 (vgl. hierzu Fig. 5 betreffs des fertigen Hohlfaser-Filtermoduls / -Dialysators 30 nach Endmontage seiner beiden jeweils stirnseitigen Blutanschlusskappen 50) ein röhrenförmiges Gehäuse auf, in welches in dessen Längsrichtung die Vielzahl bzw. das Bündel der einzelnen, im Wesentlichen parallel zueinander verlaufenden, Hohlfasern 41, 41,... (schematisch als nur wenige Linien angedeutet) angeordnet ist. An einem Ende des Gehäuses ist ein, vorzugsweise mit einem Außengewinde zum (endmontierenden) Aufschrauben der zugehörigen Blutanschlusskappe 50 ausgebildetes, Gehäuseendstück 35 und an einem gegenüberliegenden Ende des Gehäuses ist ein anderes Gehäuseendstück 35 (nicht abgebildet) vorhanden, sodass das Hohlfaser-Filtermodul 30 zwei Gehäuseendstücke aufweist. Insbesondere sind die beiden Gehäuseendstücke 35, 35 im Wesentlichen gleich bzw. identisch / analog bzw. zu einer mittigen Querschnittebene des Gehäuses bzw. des Hohlfaser-Filtermoduls spiegelsymmetrisch ausgebildet. Insofern die Offenbarung das an dem betreffenden Gehäuseendstück 35 der Filterbaugruppe wirkende Dichtsystem 1 (bzw. 1', 1" zur Gegenüberstellung des Standes der Technik) betrifft, sind die jeweiligen Darstellungen in den Figuren 1, 2, 4 sowie 5 darüberhinaus (nach unten hin) abgeschnitten.

Zur Ausbildung der in den Figuren 1 bis 6a dargestellten inneren Filterbaugruppe 31 des Hohlfaser-Filtermoduls 30 sind die beiden jeweiligen Enden des Bündels Hohlfasern 41, 41,... an den beiden jeweiligen gegenüberliegenden Enden bzw. Stirnseiten des Gehäuses durch eine Vergussmasse 45 in dem zugehörigen Gehäuseendstück 35 vergossen. Dabei bildet die Vergussmasse 45 eine stoffschlüssige Verbindung/Grenzfläche 46, insbesondere Verklebungsstelle, zwischen dem Bündel Hohlfasern 41, 41,... und der Innenseite des Gehäuseendstückes 35 (im Wesentlichen in axialer Richtung) aus.

Bekanntermaßen stellen bei dem Hohlfaser-Filtermodul 30 bzw. bei der Filterbaugruppe 31 die Hohlfasern 41, 41,... als semipermeable Membran dessen (grenzflächenpysikalische bzw. verfahrenstechnische) Hauptfunktion dar. Insofern dienen die Hohlfasern 41, 41,... dem Zwecke der Stofftrennung bzw. des Stofftransports zwischen einer innerhalb der Hohlfasern 41, 41,... geführten bzw. strömenden ersten Flüssigkeit und einer außerhalb der Hohlfasern 41, 41,... geführten bzw. strömenden zweiten Flüssigkeit. So ist Fig. 5 hinsichtlich eines Längsschnitts eines jeweiligen Endabschnitts eines (fertigen) Hohlfaser-Filtermoduls 30, d.h. mit stirnseitigen Blutanschlusskappen 50, exemplarisch zu entnehmen, dass die erste Flüssigkeit, welche insb. zu reinigendes Blut betreffen kann, durch ein mittiges Blutanschlusskappen-Lumen 55 der als Fluidanschluss montierten Blutanschlusskappe 50 eine freie (Quer-) Schnittfläche A des Bündels (offener) Hohlfasern 41, 41, ... anströmt / in diese eingeleitet wird; beziehungsweise vice versa auf der gegenüberliegenden Seite nach Passieren der Hohlfasern 41, 41, ... aus der (anderen) Schnittfläche A ausströmt / aus dieser ausgeleitet wird. Dabei weist die (Quer-) Schnittfläche A einen (in Fig. 4 bezeichneten) Schnittflächen-Durchmesser D auf, welcher insbesondere kennzeichnend für die betreffende (insb. nominale) Baugröße des zugehörigen Holfaser-Filtermoduls / Dialysators 30 ist.

Dabei kann unter realen Verhältnissen die (Quer-) Schnittfläche A des Bündels (offener) Hohlfasern 41, 41, ... in einer theoretischen bzw. idealisiert / im Wesentlichen orthogonalen Querschnittsebene oder, nämlich aufgrund von schnittbedingten / fertigungstechnischen Lagetoleranzen, zu dieser leicht schräg / spitzwinklig angestellt / geschnitten vorliegen, wobei die Querschnittsebene durch eine erste Radialachse x (in den Figuren 1,2, 4, 5: insb. Tiefenachse) sowie eine zweite Radialachse y (in den Figuren 1, 2, 4, 5: insb. Breitenachse) aufgespannt ist.

Weiter ist anhand Figuren 3 und 5 exemplarisch veranschaulicht, dass die zweite Flüssigkeit, welche insb. eine Dialysierflüssigkeit betreffen kann, über einen Dialysierflüssigkeitsanschluss 49 als einen zweiten Fluidanschluss in das Hohlfaser-Filtermodul 30 eintreten bzw. vice versa aus diesem austreten kann.

Für die vorliegende Offenbarung hinsichtlich des offenbarungsgemäßen Kontur-Dichtadapters 10 ist es jedoch unerheblich, ob die erste und die zweite Flüssigkeit zueinander im Gleichstrom, Gegenstrom und/oder Kreuzstrom über (entsprechende Fluidanschlüsse des) Hohlfaser-Dialysators 30 geführt werden.

Hinsichtlich aus dem Stand der Technik vorbekannter Filterbaugruppen-Adaptierungen an die Prüf- und/oder Trocknungseinrichtung 100 (vgl. Fig. 3 hinsichtlich der vorliegenden Offenbarung) zeigt zunächst Fig. 1 ein herkömmliches starres, also gerade: ein nicht-elastisches, Dichtsystem 1' auf Basis eines durch einen einstückigen Adapter-Grundkörper 11' ausgebildeten starren Konus-Dichtadapters 10', welcher in Richtung seiner Axialachse z auf die Filterbaugruppe 1 aufgesetzt bzw. an dieser zur fluiddichten Filterbaugruppen-Adaptierung angeordnet / adaptiert / konnektiert ist.

Wie anhand der Fig. 1 nachzuvollziehen, ermöglicht der Konus-Dichtadapter 10' eine rüstfreie blutseitige Adaptierung/Konnektierung der unterschiedlichen Filterbaugruppen-Größen 31a, 31b auf einem jeweiligen ersten Dichtkontur-Durchmesser d-K1' bzw. zweiten Dichtkontur-Durchmesser d-K2'. Allerdings wirkt sich hier die schräge Anstellung des konusförmigen Dicht-Kontaktbereiches K' aufgrund der demzufolge an der ersten Konus-Dichtkontur K1' bzw. an der zweiten Konus-Dichtkontur K2' resultierenden Querkraft-Vektoranteile der ansonsten zunächst in Richtung einer Axialachse z (in den Darstellungen der Figuren 1, 2, 4 zusammenfallend mit einer Höhenachse) des Dichtsystems 1' bzw. des Konus-Dichtadapters 10' in den starren Adapter-Grundkörper 11' eingeleiteten Andruckkraft F (s. Vektorpfeile) nachteilig aus. Insofern können diese Querkraft-Vektoranteile nachteilig mechanische Beschädigungen der ersten bzw. zweiten Filterbaugruppe 31a bzw. 31b im Bereich der ersten Konus-Dichtkontur K1' bzw. zweiten Konus-Dichtkontur K2', insb. die Vergussmasse 45a / 45b und/oder die stoffschlüssige Verbindung/Grenzfläche 46 betreffend, hervorrufen. Das Schadenspotential betreffs bspw. Materialausbrüchen und/oder Deformationen ist nicht zuletzt im Zusammenhang mit dem starren, unnachgiebigen Material (bspw. Metall, harter Kunststoff/Duroplast) des Adapter-Grundkörpers 11' sowie der ggf. zusätzlichen thermischen Materialbelastung/- erweichung aufgrund einer nachfolgenden Trocknung bspw. mit heißer Luft gravierend erhöht.

Im Gegensatz zu Fig. 1 zeigt Fig. 2 ein elastisches Dichtsystem 1" auf Basis eines herkömmlichen O-Ring-Dichtadapters 10", welcher in Richtung seiner Axialachse z auf die Filterbaugruppe 31 aufgesetzt bzw. an dieser zur fluiddichten Filterbaugruppen-Adaptierung angeordnet / adaptiert / konnektiert ist. Dabei weist der O-Ring-Dichtadapter 10" einen starren Adapter-Grundkörper 11"auf, in welchen stirnseitig ein separates elastisches O-Ring-Dichtelement 20" zur fluiddichten Filterbaugruppen-Adaptierung eingelassen ist. Dabei kann das O-Ring-Dichtelement 20" nur eine einzige spezifische Dichtkontur in Weise der ersten O-Ring-Dichtkontur K1" mit einem entsprechenden ersten Dichtkontur-Durchmesser d-K1" ausbilden. Dabei ist die erste O-Ring-Dichtkontur K1" bzw. der erste Dichtkontur-Durchmesser d-K1" ausgebildet, analog der Blutanschlusskappe 60 mit einem Blutanschlusskappen-Dichtring 60 (vgl. Fig. 5) auf der Schnittfläche der Vergussmasse 45 (bspw. eines Polyurethan-Blocks) zu dichten. Demzufolge sind bisher im Stand der Technik entsprechende O-Ring-Dichtadapter 10" als Wechselteile zur Umrüstung zwischen Filterbaugruppen 31a, 31b unterschiedlicher Baugrößen vorzusehen. Sprich, jeder O-Ring-Dichtadapter 10" ist nur für eine zugehörige / einzige spezifische Filterbaugruppe 31 mit der entsprechenden Baugröße passend, was nachteilig eine Umrüstung der O-Ring-Dichtadapter 10" bei einem Wechsel der Baugrößen / Produkttypen erforderlich macht.

Gemäß einem allgemeinen Grundaufbau weist, unter Bezugnahme auf die Figuren 1, 2, 4, 6a, ein (gattungsgemäßer) Dichtadapter, d.h. der offenbarungsgemäße Kontur-Dichtadapter 10 bzw. der Konus-Dichtadapter 10' bzw. der O-Ring-Dichtadapter 10", ein Lumen 15 / 15' / 15" als inneren Hohlraum für eine Durchströmung auf. Das Lumen 15 /15' / 15" ist an seinen axial bzw. in der Axialachse z gegenüberliegenden Enden geöffnet. Im Betrieb der Prüf-/Trocknungseinrichtung 100 dient das Lumen 15 / 15' / 15", um einen Strömungsraum / Fluidpfad für ein Prüf- und/oder Trocknungsmedium von der Schnittfläche A des Bündels freigeschnittener, d.h. offener, Hohlfaser 41, 41,... als einer Eintritts-/-Austritts-Strömungsfläche auszubilden. Bspw. kann der Strömungsraum / Fluidpfad zwischen der Schnittfläche A des Bündels freigeschnittener, d.h. offener, Hohlfaser 41, 41,... und einem mit einer Prüf-/Trocknungsmedium-Leitung 102 der Prüf-/Trocknungseinrichtung 100 verbundenen Anschlussstück 101 (Fig. 3) ausgebildet werden. Der Dichtadapter 10 /10' / 10" ist eingerichtet, an ein jeweiliges der beiden gegenüberliegenden Gehäuseendstücke 35, 35 der Filterbaugruppe 31 (axial) angefügt bzw. angesetzt, bswp. angepresst, herangefahren, usw., zu werden bzw. zu sein. Der Dichtadapter 10 /10' / 10" kann insbesondere eingerichtet sein, zwischen das bzw. dem jeweilige(n) der beiden gegenüberliegenden Gehäuseendstücke 35, 35 und das bzw. dem zugehörigen Anschlussstück 101 (axial) eingefügt zu werden bzw. zu sein.

Bei Aufbringen einer axialen Anpresskraft / Andruckkraft F durch die Prüf-/Trocknungseinrichtung 100 (vgl. Fig. 3) entsteht allgemein die Dichtwirkung, um die Filterbaugruppe 31 an die Prüf-/Trocknungseinrichtung 100, insb. aber nicht limitierend via dem insb. flanschartigen Anschlussstück 101, fluiddicht zu adaptieren bzw. zu konnektieren. Dabei meint "fluiddicht" insbesondere dicht für eine Flüssigkeit, vorzugsweise für ein flüssiges Prüfmedium wie Wasser und/oder ein Benetzungsmittel, und/oder dicht für eine Gasphase, insb. für ein gasförmiges Prüfmedium und/oder Trocknungsmedium wie heiße Luft. Wie in Fig. 3 schematisch / prinzipiell veranschaulicht, kann das Prüfmedium über jeweilig stirnseitig, insb. upstream bzw. downstream, von der Filterbaugruppe 31 vorgesehene Prüf-/Trockungsmedium-Leitungen 102, 102 geleitet werden, um die adaptierte/konnektierte Filterbaugruppe 31 zweckgemäß zu durchströmen.

Die (im Wesentlichen) axiale Andruckkraft F ist in den Figuren 1, 2, 4 beidseitig der (axialen) Mittellinie anhand von (zu dieser parallelen) Pfeilen / Kraftvektoren symbolisiert. Im Sinne einer entlang des Umfangs des betreffenden Dichtadapters 10 / 10' / 10" gleichmäßigen und damit optimalen Dichtwirkung sollen die Mittellinie des Dichtadapters 10 / 10' / 10" und die Längsachse der Filterbaugruppe 31 gemäß dem Bündel Hohlfasern 41, 41, ... im Wesentlichen parallel ausgerichtet sein bzw. fluchten bzw. idealerweise zusammenfallen.

An dieser Stelle sei es angemerkt, dass es für die vorliegende Offenbarung im Wesentlichen unerheblich ist, in welcher räumlichen Orientierung das gesamte Dichtsystem 1 / 1' /1" liegt. Insbesondere ist es unerheblich, ob für das Beipiel einer vertikalen Konfiguration der Prüf-/Trockungseinrichtung 100 mit einer (optionalen) vertikalen Filterbaugruppenhalterung bzw. Aufnahme 103 (vgl Fig. 3) der Dichtadapter 10/10' / 10" oberhalb, wie in den Figuren 1 bis 4, 5a dargestellt, oder unterhalb der (eine oder anderen) Filterbaugruppe 31 angeordnet ist. Bspw. ist gleichermaßen eine Konfiguration der Prüf-/Trocknungseinrichtung 100 (vgl. Fig. 3) mit einer horizontalen Aufnahme 103 denkbar, d.h., dass eine Längsrichtung, insb. zentrale Filterbaugruppen-Axialachse, der zu prüfenden / trocknenden Filterbaugruppe 31 zusammen mit einer dazu im Wesentlichen parallelen, insb. konzentrischen, Längsrichtung, insb. Mittellinie bzw. zentralen Dichtadapter-Axialachse z, des Dichtadapters 10 in einer horizontalen Lage ausgerichtet sein können. Sprich, bezogen auf die graphische Darstellung, wären dann der Dichtadapter 10 und die Filterbaugruppe 31 nicht vertikal übereinander (wie in den Figuren 1 bis 4, 5a), sondern horizontal nebeneinander darzustellen.

Figur 4 (unter Bezugnahme auf Figuren 3, 5) sowie Figuren 6a/5b zeigen den offenbarungsgemäßen (Kontur-) Dichtadapter 10 gemäß einem ersten Ausführungsbeispiel, wobei der (Kontur-) Dichtadapter 10 zur Adaptierung/Konnektierung der Filterbaugruppe 31 für deren Funktionsprüfung in einer Prüf- und/oder Trocknungseinrichtung eingerichtet ist. Eine solche Funktionsprüfung kann insb. im Rahmen der Fertigung des Hohlfaser-Filtermoduls 30, insb. des Dialysators [wie in Fig. 5 mit der / den (end)montierten Blutanschlusskappe(n) 50 dargestellt] oder auch zu Entwicklungszwecken anfallen.

Der offenbarungsgemäße (Kontur-) Dichtadapter 10 weist zur (universellen) fluiddichten Filterbaugruppen-Adaptierung einen (starren) Adapter-Grundkörper 11 auf, in/an welchem ein elastisches Kontur-Dichtelement 20 ein-/angesetzt ist. Das elastische Kontur-Dichtelement 20 ist in eine, der Filterbaugruppen-Stirnseite zugewandte, Dichtadapter-Stirnseite entlang eines Umfangs der Dichtadapter-Stirnseite eingesetzt. Zu insb. geometrischen Varianten des offenbarungsgemäßen elastischen Kontur-Dichtelements 20 wird bereits an dieser Stelle auf die Figuren 6c / 7 / 8 hingewiesen.

Dabei ist unter Bezugnahme auf insb. Figuren 3 und 4 der (Kontur-) Dichtadapter 10 eingerichtet, in der Axialachse z an einer Filterbaugruppen-Stirnseite der Filterbaugruppe 31 in(nerhalb) der Prüf-/Trocknungseinrichtung eingefügt zu sein (bzw. zu werden). Insbesondere kann (Kontur-) Dichtadapter 10 eingerichtet sein (vgl. Figur 3), in der Axialachse z zwischen der Filterbaugruppen-Stirnseite der Filterbaugruppe 31 und einem mit der (jeweiligen) Prüf-/Trocknungsmedium-Leitung 101 der Prüf-/Trocknungseinrichtung 100 verbundenen und/oder verbindbaren Anschlussstück 101 eingefügt zu sein (bzw. zu werden). Bei Aufbringen der axialen Andruckkraft F (insb. Fig. 4) in der Axialachse z liegen das elastische Kontur-Dichtelement 20 und die Filterbaugruppen-Stirnseite in einem dichtenden Kontaktbereich K fluiddicht aneinander an. Somit wird das Lumen 15 als ein Strömungsweg von der Filterbaugruppe 31 (weg) ausgebildet, wobei der Strömungsweg insb. zwischen der Filterbaugruppe 31 und dem Anschlussstück 101 ausgebildet sein kann. Dabei sei an dieser Stelle darauf hingewiesen, dass eine (spezifische) Ausführung der (optionalen) Prüf-/Trocknungseinrichtung 100 und/oder eine (spezifische) Ausführung des (optionalen) Anschlussstückes 101 Prüf-/Trocknungseinrichtung für die vorliegende Offenbarung nicht wesentlich ist/sind.

Wie insbesondere anhand der Figuren 4, 6a/b erkennbar, formt das elastische Kontur-Dichtelement 20 einen, auf den Querschnitt des Kontur-Dichtelements 20 bezogen, konvexen, gemäß dem ersten Ausführungsbeispiel nämlich O-Ring-artigen, ersten Kontur-Dichtabschnitt 21 und einen konvexen, gemäß dem ersten Ausführungsbeispiel nämlich O-Ring-artigen, zweiten Kontur-Dichtabschnitt 22 aus. Der erste Kontur-Dichtabschnitt 21 und der zweite Kontur-Dichtabschnitt 22 sind miteinander durch einen konkaven / eingezogenen Mittenbereich des Kontur-Dichtelements 20 (stoffschlüssig) verbunden. In erster Näherung ist insgesamt eine quasi keulenartige Doppel-O-Ring-Kontur zu erkennen. Mit anderen Worten, ist eine elastische Adaptier-/Konnektierzone des Kontur-Dichtelements 20 als ein (zumindest zweiteiliger, ggf. mehrteiliger) Dicht-Kontaktbereich K ausgebildet, welche wiederum in (zumindest) zwei (bzw. mehrere) dichtungsausprägende Unterabschnitte untergliedert ist. Diese sind in der Außenkontur als der erste Kontur-Dichtabschnitt 21 und der zweite Kontur-Dichtabschnitt 22 (ggf. der dritte, vierte, usw. Kontur-Dichtabschnitt, in Reihe / nebeneinanderliegend) konvex ausgeprägt.

Dabei ist der zweite Kontur-Dichtabschnitt 22 zu dem ersten Kontur-Dichtabschnitt 21 in einer ersten Radialachse (in den Figuren 4, 6a/b: Tiefenachse) x und in einer zweiten Radialachse (in den Figuren 4, 6a/b: Breitenachse) y erweitert. Sprich, ein erster Dichtkontur-Durchmesser d-K1 (Fig. 6a/b) der ersten Dichtkontur K1 ist größer als ein konzentrischer zweiter Dichtkontur-Durchmesser d-K2 der zweiten Dichtkontur K2.

Dabei ist ferner der zweite Kontur-Dichtabschnitt 22 zu dem ersten Kontur-Dichtabschnitt 21 in der Axialachse z um einen Axialversatz h versetzt. Wie insb. der Figuren 4, 6a/b für das Dichtsystem 1 gezeigt, aber grundsätzlich auch den Figuren 6c / 7 / 8 für das isoliert ohne den Adaper-Grundkörper 11 dargestellte Kontur-Dichtelement 20 zu entnehmen, ist die (äußere) zweite Dichtkontur K2 gegenüber der (inneren) ersten Dichtkontur K1 entlang der Axialachse z um einen Axialversatz h ferner von einem Longitudinalzentrum des Dichtadapters 10 angeordnet.

Anhand der Figur 6a/b ist die offenbarungsgemäße Wirkweise bzw. eine fallweise unterschiedlich lokal entstehende Dichtwirkung des Dichtsystems 1 veranschaulicht, wozu durch graphische Überlagerung die jeweiligen Situationen bei der Adaptierung / Konnektierung, insb. bei der Prüfung und/oder Trocknung, für zwei unterschiedlich große Filterbaugruppen 31a, 31b vergleichbar gemacht sind. Das Kontur-Dichtelement 20 ist derart ausgeformt, dass der Kontaktbereich K im ersten Falle des Anliegens der ersten Filterbaugruppe 31a einer (kleineren) ersten Baugröße durch den ersten Kontur-Dichtabschnitt 21 als eine erste Dichtkontur K1 ausgebildet ist. Dabei ist (idealerweise) im ersten Falle der Kontaktbereich K nicht durch den zweiten Kontur-Dichtabschnitt 22 ausgebildet. Dabei ist ferner das Kontur-Dichtelement 20 derart ausgeformt, dass der Kontaktbereich K im zweiten Falle des Anliegens der zweiten Filterbaugruppe 31b einer (demgegenüber größeren) zweiten Baugröße durch den zweiten Kontur-Dichtabschnitt 22 als eine zweite Dichtkontur K2 ausgebildet ist. Dabei ist (idealerweise) im zweiten Falle der Kontaktbereich K nicht durch den ersten Kontur-Dichtabschnitt 21 ausgebildet.

Mit anderen Worten, sind insb. der erste und/oder der zweite Dichtkontur-Durchmesser d-K1, d-K2 und/oder der Höhenversatz h der dichtungsausprägenden Konturen an die unterschiedlichen Baugrößen der zu adaptierenden Filterbaugruppen 31a, 31b angepasst. Insbesondere soll hierbei (siehe Figuren 6a/5b) eine erste Filterbaugruppe 31a, welche durch einen [gegenüber der zweiten Filterbaugruppe 31b bzw. gegenüber dem (Kontur-) Dichtadapter 10] kleineren nominellen Kopfbereich-Durchmesser und/oder einen zugehörigen Schnittflächen-Durchmesser D (bezogen auf das Bündel offener Holhfasern 41, 41,...) bezeichnet / spezifiziert sein kann, auf der (bezogen auf die Dichtadapter-Stirnfläche, in den Adapter-Grundkörper 11 hinein) abgesenkten Innenkontur, d.h. auf dem ersten Kontur-Dichtabschnitt 21, fluiddicht gedichtet werden. Wiederum soll hierbei eine zweite Filterbaugruppe 31b, welche durch einen [gegenüber der ersten Filterbaugruppe 31a bzw. gegenüber dem (Kontur-) Dichtadapter 10] größeren nominellen Kopfbereich-Durchmesser und/oder einen zugehörigen Schnittflächen-Durchmesser D bezeichnet / spezifiziert sein kann, auf der (bezogen auf die Dichtadapter-Stirnfläche, in Richtung aus dem Adapter-Grundkörper 11 heraus) erhöhten Außenkontur, d.h. auf dem zweiten Kontur-Dichtabschnitt 22, fluiddicht gedichtet werden.

Wie insbesondere der Detailvergrößerung der Figur 6b zu entnehmen, bildet der Adapter-Grundkörper 11 entlang des Umfangs der Dichtadapter-Stirnseite eine Nut 13 aus. Die Nut 13 dient dazu, das Kontur-Dichtelement 20 aufzunehmen. Dazu umschließt die Nut 13 das in sie eingesetzte, insb. zumindest teilweise formschlüssig eingepasste, Kontur-Dichtelement 20 unter Freilassung des dichtenden Kontaktbereiches K. Dabei ist ein trapezförmiger Querschnitt der Nut 13 an der Dichtadapter-Stirnseite mittels zweier die Freilassung beidseitig verengenden Rastnasen 14, 14 hinterschnitten ausgeformt. In einer zu der Freilassung gegenüberliegenden Grundfläche/Bodenfläche der trapezförmigen Nut 13 ist umlaufende (optionale) Konturfuß-Nut 19 versenkt bzw. ausgebildet. Dabei ist die umlaufende Konturfuß-Nut 19 entlang eines bzw. des Umfangs der Dichtadapter-Stirnseite ausbildet. In der Konturfuß-Nut 19 ist ein umlaufender korrespondierender (optionaler) Konturfuß 29 des eingesetzten Kontur-Dichtelements 20 formschlüssig aufgenommen. Im ersten Ausführungsbeispiel weist der Konturfuß 29 bzw. die Konturfuß-Nut 19 exemplarisch einen im Wesentlichen rechteckigen Querschnitt auf.

Im Falle der hier gezeigten Figuren 4, 6a/6b/6c sowie 7 und 8 handelt es sich um den Fall des (Kontur-) Dichtadapters 10 mit ein-/angesetzen bzw. eingelegtem, insb. formschlüssig eingepassten, und damit wechselbaren Kontur-Dichtelement 20. Dieser Fall kann bspw. hinsichtlich der prädiktiven Wartung (engl.: "Predictive Maintenance") und/oder hinsichtlich einer Bezugsmöglichkeit als Zulieferteil präferiert sein.

Jedoch kann, anders als in besagtem Falle der Darstellungen der Figuren 4, 6a/b mit einem ein-/angesetzten separaten Kontur-Dichtelement 20 veranschaulicht, gleichermaßen der Fall denkbar bzw. präferiert sein, dass das Kontur-Dichtelement 20 integral an und/oder mit dem (starren) Adapter-Grundkörper 11 gefertigt bzw. ausgebildet ist, bspw. mittels Zwei-Komponenten-Spritzguß oder dergleichen Formgebungs-/Füge-/Verbindungsverfahren.

Hinsichtlich eines idealerweise entlang des gesamten Umfangskreises (360 °) hinweg gleichmäßigen Anpressverhaltens der axialen Andruckkräfte F und einer damit idealerweise gleichmäßig erzeugten Dichtwirkung im Adaptier-/Konnektier- bzw. Dicht-Kontaktbereich K soll der (Kontur-) Dichtadapter 10 (im Wesentlichen) axial ausgerichtet zu der Filterbaugruppe 31 angeordnet / angedrückt werden. D.h., insb. soll der (Kontur-) Dichtadapter 10 nicht axial verkantet / schief / schräg zu der Filterbaugruppe 31 angeordnet / angedrückt werden. Mit anderen Worten, ist es für die ordnungsgemäße Funktionsprüfung in der Prüf-/Trocknungseinrichtung wesentlich, dass der (Kontur-) Dichtadapter 10 derart eingerichtet bzw. ausgebildet ist, dass die zentrale (Dichtadapter-) Axialachse z im Wesentlichen (d.h. insb. bis auf fertigungstechnische Maß- und Lage-Passungstoleranzen bzw. ein tolerierbares Spiel) parallel, insb. konzentrisch, zu der zentralen Filterbaugruppen-Axialachse angeordnet ist, insb. mit dieser im Wesentlichen zusammenfällt.

Der Kontur-Dichtadapter 10 bzw. das Konturelement 20 kann insb. derart ausgelegt bzw. eingerichtet sein, um trotz (axialer) Unebenheiten des Dichtkontaktbereichs K auf Seiten (einer Dichtfläche) der Filterbaugruppe 31 sicher (axial) zu dichten. Dabei kann die Auslegung insbesondere eine Maßauslegung und/oder eine Auslegung des elastischen Materialverhaltens (Deformation in Abhängigkeit von Kraft, insb. Vektor, Kinematik, usw.) betreffen. Bspw. können die (axialen) Unebenheiten, technologisch bedingt, durch das Schneiden der Vergussmasse (bspw. des weichen Polyurethan-Blockes) mehr als 0,3 mm betragen.

Dabei ist eine (optional bevorzugte) Maßauslegung des Kontur-Dichtadapters 10 anhand der direkten Gegenüberstellung der Figur 5 (betreffs des offenbarungsgemäßen Dichtsystems 1 bzw. der Filterbaugruppe 31, d.h. des Hohlfaser-Filtermoduls ohne montierte Blutanschlusskappen 50) im Vergleich zu der Figur 4 (betreffs des Hohlfaser-Filtermoduls 30 mit montierten Blutanschlusskappen 50) auf einem Figurenblatt, jedoch mit gemeinsamer Mittellinie, entnehmbar. Insbesondere kann die Maßauslegung des Kontur-Dichtadapters 10, insb. des Dicht-Kontaktbereichs K, derart eingerichtet sein, dass die dichtende / dichtungsausprägende erste bzw. zweite Dichtkontur K1 / K2, insbesondere der erste bzw. zweite Dichtkontur-Durchmesser d-K1/ d-K2, jeweils gleich oder größer ist (Fig. 4), als die dichtungsausprägende Kontur des Dicht-Kontaktbereiches K* (Fig. 5) der mit den Blutanschlusskappen 50 montierten/komplettierten Filterbaugruppe 31 gleicher Baugröße; insb. jeweils gleich oder größer ist als ein Blutanschlusskappen-Dichtdurchmesser d-K60.

Mit anderen Worten, kann aus der direkten Gegenüberstellung der Figur 5 mit der Figur 4 die alternativ oder kumulativ bevorzugte Ausführungsform abgeleitet werden, dass die erste Dichtkontur K1, insb. der erste Dichtkontur-Durchmesser d-K1 gleich oder größer sein kann als ein jeweilig zugehöriger erster Blutanschlusskappen-Dichtdurchmesser d-K60 eines ersten Blutanschlusskappen-Dichtrings 60, welcher zur Dichtung der ersten Filterbaugruppe 31a durch eine jeweilig zugehörige erste Blutanschlusskappe 50 in dem Hohlfaser-Filtermodul (der ersten Baugröße) vorgesehen und eingerichtet ist. Alternativ oder kumulativ kann vorzugsweise die zweite Dichtkontur K2, insb. der zweite Dichtkontur-Durchmesser d-K2, gleich oder größer sein als ein zugehöriger zweiter Blutanschlusskappen-Dichtdurchmesser d-K60 eines zweiten Blutanschlusskappen-Dichtrings 60, welcher zur Dichtung der zweiten Filterbaugruppe 31b durch eine jeweilig zugehörige zweite Blutanschlusskappe 50 in dem Hohlfaser-Filtermodul (der zweiten Baugröße) vorgesehen und eingerichtet ist. Zum besseren Verständnis sei auch auf die graphische Überlagerung zweier unterschiedlich großer Filterbaugruppen 31a bzw. 31b in Figuren 6a/6b für das vorstehend anhand der Figuren 3, 4 diskutierte erste Ausführungsbeispiel verwiesen.

In der Figur 6c sind für die geometrische Konturauslegung weitere charakteristische Formkontur-Abmaße anhand des (Kontur-) Dichtelements gemäß dem ersten Ausführungsbeispiel spezifisch bemaßt. Insofern sind diese zusätzlich zu den anhand der Figur 6a/6b bereits definierten charakteristische Formkontur-Abmaßen (nämlich: dem ersten Dichtkontur-Durchmesser d-K1, dem zweiten Dichtkontur-Durchmesser d-K2, dem Axialversatz h) entnehmbar: Das Kontur-Dichtelement 20 bildet eine umfängliche Innenfläche mit einem Innendurchmesser W-innen aus. Ferner bildet das Kontur-Dichtelement 20 eine umfängliche Außenfläche mit einem Außendurchmesser W-außen aus. Ein Rundkontur-Durchmesser d-Rundkontur wird jeweilig von dem im Wesentlichen O-Ring-förmigen ersten Kontur-Dichtabschnitt 21 bzw. von dem im Wesentlichen O-Ring-förmigen zweiten Kontur-Dichtabschnitt 22 konvex ausgeformt. Für den im Wesentlichen O-Ring-förmigen ersten Kontur-Dichtabschnitt 21 kann ein erster Mittelpunkt M1 im graphischen Zentrum des ersten Kontur-Dichtabschnitts 21 ermittelt werden. Dementsprechend ist für den im wesentlichen O-Ring-förmigen zweiten Kontur-Dichtabschnitt 21 ein zweiter Mittelpunkt M2 fadenkreuzartig eingezeichnet. Ein Radialversatz, um welchen der zweite Kontur-Dichtabschnitt 22 von dem ersten Kontur-Dichtabschnitt 21 in der ersten bzw. zweiten Radialachse x, y (vgl. Fig. 4) radial versetzt ist, entspricht einem radialen Abstand zwischen dem zweiten Mittelpunkt M2 und dem ersten Mittelpunkt M1. Ferner ist das (Kontur-) Dichtelement 20 mit einem lichten axialen Dichtelement-Höhe H bemaßt. Dabei ergibt sich anhand Fig. 6c beispielhaft, dass die lichte axiale Dichtelement-Höhe H sich (in etwa) aus der Summe des Rundkontur-Durchmesser d-Rundkontur plus dem Axialversatz h plus ggf. einer Höhe des optional vorhandenen Konturfußes 29 ergeben kann.

Unter Bezugnahme auf die vorstehenden Erläuterungen zu dem offenbarungsgemäßen (Kontur-) Dichtadapter 10 anhand der Figuren 3 bis 6c zu dem ersten Ausführungsbeispiel zeigen die Figuren 7 und 8 das elastische Kontur-Dichtelement 20 gemäß einem zweiten bzw. dritten Ausführungsbeispiel der vorliegenden Offenbarung, welche (geometrische) Abwandlungen des in Fig. 6c gemäß dem ersten Ausführungsbeispiel gezeigten Kontur-Dichtelementes 20 darstellen. Gemäß der Fig. 7 kann ein Querschnitt des Kontur-Dichtelements 20 eine im Wesentlichen ovale / elongierte Konturform mit Axialversatz aufweisen. Gemäß der Fig. 8 kann ein Querschnitt des Kontur-Dichtelements 20 eine im Wesentlichen rechteckige Konturform mit Axialversatz aufweisen. Dabei wird auf die Diskussion von ansonsten analogen Merkmalen und Gesichtspunkten zur Vermeidung von Wiederholungen verzichtet.

Ferner sei an dieser Stelle grundsätzlich angemerkt, dass denkbar das offenbarungsgemäße Dichtsystem 1' entweder (nur) an der einen Stirnseite oder (nur) an der (gegenüberliegenden) anderen Stirnseite oder an beiden eingesetzt wird.

Insbesondere kann es fallweise für die Prüf-/Trocknungseinrichtung (vgl. Figur 3) bevorzugt sein, dass eine Kombination von dem offenbarungsgemäßen Dichtssystem mit einem offenbarungsgemäßen (Kontur-) Dichtadapter 10 (siehe Figuren 4, 6a bis 8) auf / an einer der beiden Stirnseiten mit einem aus dem Stand der Technik bekannten Dichtsystem (insb. mit dem starren Konus-Dichtadapter gemäß der Fig. 1 oder mit dem elastischen O-Ring-Dichtadapter gemäß der Fig. 2) auf / an der (gegenüberliegenden) anderen der beiden Stirnseiten für den Prüf-/Trocknungsbetrieb eingerichtet wird bzw. ist.

### Bezugszeichen

- 1: Dichtsystem
- 1'; 1": Dichtsystem (Stand der Technik)
- 10: (Kontur-) Dichtadapter
- 10': Konus-Dichtadapter (Stand der Technik)
- 10": O-Ring-Dichtadapter (Stand der Technik)
- 11: Adapter-Grundkörper
- 11'; 11": Adapter-Grundkörper (Stand der Technik)
- 13: Nut (für Kontur-Dichtelement)
- 14: Rastnase
- 15: Lumen
- 15'; 15": Lumen (Stand der Technik)
- 19: Konturfuß-Nut
- 20: Kontur-Dichtelement
- 20": O-Ring-Dichtelement (Stand der Technik)
- 21: erster Kontur-Dichtabschnitt
- 22: zweiter Kontur-Dichtabschnitt
- 29: Konturfuß
- 30: Hohlfaser-Filtermodul
- 31: Filterbaugruppe (ohne montierte Blutanschlusskappen)
- 35: Gehäuseendstück (mit Außengewinde)
- 41: Hohlfaser(n)
- 45: Vergussmasse
- 46: Grenzfläche (stoffschlüssige Verbindung)
- 49: Dialysierflüssigkeitsanschluss
- 50: Blutanschlusskappe
- 55: Blutanschlusskappen-Lumen
- 60: Blutanschlusskappen-Dichtring
- 100: Prüf-/Trocknungseinrichtung
- 101: Anschlussstück
- 102: Prüf-/Trocknungsmedium-Leitung
- 103: Aufnahme
- A: Schnittfläche (des Bündels offener Fasern)
- D: Schnittflächen-Durchmesser (des Bündels offener Fasern)
- d-K1: erster Dichtkontur-Durchmesser (für erste Filterbaugruppe)
- d-K2: zweiter Dichtkontur-Durchmesser (für zweite Filterbaugruppe)
- d-K1'; d-K1": erster Dichtkontur-Durchmesser (Stand der Technik)
- d-K2': zweiter Dichtkontur-Durchmesser (Stand der Technik)
- d-K60: Blutanschlusskappen-Dichtdurchmesser
- d-Rundkontur: Rundkontur-Durchmesser
- F: Andruckkraft
- H: Dichtelement-Höhe
- h: Axialversatz (Höhenversatz)
- K: (Dicht-) Kontaktbereich
- K': (Dicht-) Kontaktbereich (Stand der Technik)
- K*: (Dicht-) Kontaktbereich (montierte Blutanschlusskappe)
- K1: erste Dichtkontur
- K2: zweite Dichtkontur
- K1': erste Konus-Dichtkontur (Stand der Technik)
- K2': zweite Konus-Dichtkontur (Stand der Technik)
- K1": erste O-Ring-Dichtkontur (Stand der Technik)
- M1: erster Mittelpunkt (der ersten Dichtkontur)
- M2: zweiter Mittelpunkt (der zweiten Dichtkontur)
- W-außen: Außendurchmesser
- W-innen: Innendurchmesser
- x: erste Radialachse (Breitenachse)
- y: zweite Radialachse (Tiefenachse)
- z: Axialachse (Höhenachse)

## Patentansprüche

1. Dichtadapter (10) mit einem elastischen Dichtelement (20) zur fluiddichten Filterbaugruppen-Adaptierung für eine Funktionsprüfung von Hohlfaser-Filtermodulen (30) in einer fertigungstechnischen Prüf-/Trocknungseinrichtung (100), wobei:
- der Dichtadapter (10) einen Adapter-Grundkörper (11) mit einem inneren Lumen (15), welches an hinsichtlich einer Axialachse (z) des Dichtadapters (10) gegenüberliegenden Enden geöffnet ist, aufweist;
- der Dichtadapter (10) eingerichtet ist, in der Axialachse (z) an einer Filterbaugruppen-Stirnseite einer, als das Hohlfaser-Filtermodul (30) ohne montierte Blutanschlusskappen (50) ausgebildeten, Filterbaugruppe (31) in die Prüf-/Trocknungseinrichtung (100) derart angefügt zu sein, dass bei Aufbringen einer axialen Andruckkraft (F) in der Axialachse (z) durch die Prüf-/Trocknungseinrichtung (100) das elastische Dichtelement (20), welches in eine, der Filterbaugruppen-Stirnseite zugewandte, Dichtadapter-Stirnseite entlang eines Umfangs der Dichtadapter-Stirnseite integriert und/oder eingesetzt ist, und die Filterbaugruppen-Stirnseite in einem dichtenden Kontaktbereich (K) fluiddicht aneinander anliegen, um das Lumen (15) als einen Strömungsweg zwischen der Filterbaugruppe (31) und der Prüf-/Trocknungseinrichtung (100) auszubilden;
**dadurch gekennzeichnet,**
**dass** das elastische Dichtelement (20) als ein Kontur-Dichtelement mit einem konvexen ersten Kontur-Dichtabschnitt (21) und zumindest einem, zu dem ersten Kontur-Dichtabschnitt (21) radial (x, y) erweiterten und in der Axialachse (z) um einen Axialversatz (h) versetzten, konvexen zweiten Kontur-Dichtabschnitt (22) derart ausgeformt ist, dass der Kontaktbereich (K) fallweise entweder durch den ersten Kontur-Dichtabschnitt (21) als eine erste Dichtkontur (K1) für eine anliegende erste Filterbaugruppe (31a) einer ersten Baugröße oder durch den zweiten Kontur-Dichtabschnitt (22) als eine zweite Dichtkontur (K2) für eine anliegende zweite Filterbaugruppe (31b) einer anderen zweiten Baugröße ausgebildet ist.

2. Dichtadapter (10) mit einem Kontur-Dichtelement (20) nach Anspruch 1, wobei die erste Dichtkontur (K1) als ein erster Dichtkontur-Durchmesser (d-K1) und die zweite Dichtkontur (K2) als ein, gegenüber dem ein ersten Dichtkontur-Durchmesser (d-K1) äußerer und/oder radial erweiterter, zweiter Dichtkontur-Durchmesser (d-K2), insbesondere konzentrisch, ausgebildet wird.

3. Dichtadapter (10) mit einem Kontur-Dichtelement (20) nach Anspruch 1 oder 2, wobei die äußere zweite Dichtkontur (K2) gegenüber der ersten Dichtkontur (K1) entlang der Axialachse (z) um einen Axialversatz (h) ferner von einem Longitudinalzentrum des Dichtadapters (10) angeordnet ist.

4. Dichtadapter (10) mit einem Kontur-Dichtelement (20) nach einem der vorhergehenden Ansprüche, wobei die erste Dichtkontur (K1) und/oder die zweite Dichtkontur (K2) eine Schnittfläche (A) der Filterbaugruppen-Stirnseite der Filterbaugruppe (31), welche eine Vielzahl, insbesondere ein Bündel, freigeschnittener Hohlfasern (41, 41,...) umfasst, außenumfänglich vollständig umschließt.

5. Dichtadapter (10) mit einem Kontur-Dichtelement (20) nach einem der vorhergehenden Ansprüche, wobei das Kontur-Dichtelement (20) ausgebildet ist, entlang der ersten Dichtkontur (K1) und/oder der zweiten Dichtkontur (K2) gegen eine Vergussmasse (45), welche auf Seiten der Filterbaugruppen-Stirnseite zur stoffschlüssigen Verbindung der Vielzahl Hohlfasern (41, 41,...) an einem jeweiligen Gehäuseendstück (35) vorgesehen ist, fluiddicht anzuliegen.

6. Dichtadapter (10) mit einem Kontur-Dichtelement (20) nach einem der vorhergehenden Ansprüche, wobei der Dichtadapter (10) derart eingerichtet ist, dass jeweilig die erste Dichtkontur (K1), insb. der erste Dichtkontur-Durchmesser (d-K1), und/oder die zweite Dichtkontur (K2), insb. der zweite Dichtkontur-Durchmesser (d-K2), gleich oder größer ist als ein jeweilig zugehöriger erster und/oder zweiter Blutanschlusskappen-Dichtdurchmesser (d-K60) eines zugehörigen ersten und/oder zweiten Blutanschlusskappen-Dichtrings (60), welcher jeweilig zur Dichtung der zugehörigen ersten und/oder zweiten Filterbaugruppe (31a, 31b) durch eine jeweilig zugehörige erste und/oder zweite Blutanschlusskappe (50) in dem Hohlfaser-Filtermodul (30) vorgesehen und eingerichtet ist.

7. Dichtadapter (10) mit einem Kontur-Dichtelement (20) nach einem der vorhergehenden Ansprüche, wobei:
- die erste Dichtkontur (K1), vorzugsweise der erste Dichtkontur-Durchmesser (d-K1), 38 mm bis 51 mm, insbesondere 45 mm, bemisst; und/oder
- die zweite Dichtkontur (K2), vorzugsweise der zweite Dichtkontur-Durchmesser (d-K2), 44 mm bis 65 mm, insbesondere 53,4 mm, bemisst; und/oder
- der Axialversatz (h) 0,3 mm bis 1 mm, insbesondere 0,65 mm, bemisst; und/oder
- ein Radialversatz, um welchen ein dem zweiten Kontur-Dichtabschnitt (22) zugehöriger zweiter Mittelpunkt (M2) von einem dem ersten Kontur-Dichtabschnitt (21) zugehörigen ersten Mittelpunkt (M1) radial (x, y) versetzt ist, 2,5 mm bis 5mm, insbesondere 3,7mm, bemisst; und/oder
- eine lichte axiale Dichtelement-Höhe (H) des Kontur-Dichtelements (20) 3 mm bis 6 mm, insbesondere 4,3 mm, bemisst; und/oder
- ein Innendurchmesser (W-innen) einer umfänglichen Innenfläche des Kontur-Dichtelements (20) 34 mm bis 55 mm, insbesondere 43,2 mm, bemisst; und/oder
- ein Außendurchmesser (W-außen) einer umfänglichen Außenfläche des Kontur-Dichtelements (20) 40 mm bis 69 mm, insbesondere 56,2 mm, bemisst; und/oder
- ein Rundkontur-Durchmesser (d-Rundkontur), welcher von dem ersten Kontur-Dichtabschnitt (21) und/oder von dem zumindest einen zweiten Kontur-Dichtabschnitt (22) jeweilig konvex ausgeformt wird, 2 mm bis 4 mm, insbesondere 2,8 mm, bemisst.

8. Dichtadapter (10) mit einem Kontur-Dichtelement (20) nach einem der vorhergehenden Ansprüche, wobei das Kontur-Dichtelement (20) mit zumindest einem weiteren konvexen dritten Kontur-Dichtabschnitt, welcher zu dem zweiten Kontur-Dichtabschnitt (22) radial (x, y) erweitert und in der Axialachse (z) um einen weiteren Axialversatz versetzt ist, derart ausgeformt ist, dass der Kontaktbereich (K) fallweise entweder durch den ersten Kontur-Dichtabschnitt (21) als eine erste Dichtkontur (K1) für eine anliegende erste Filterbaugruppe (31a) einer ersten Baugröße oder durch den zweiten Kontur-Dichtabschnitt (22) als eine zweite Dichtkontur (K2) für eine anliegende zweite Filterbaugruppe (31b) einer anderen zweiten Baugröße oder durch den dritten Kontur-Dichtabschnitt als eine dritte Dichtkontur für eine anliegende dritte Filterbaugruppe einer noch weiteren dritten Baugröße ausgebildet ist.

9. Dichtadapter (10) mit einem Kontur-Dichtelement (20) nach einem der vorhergehenden Ansprüche, wobei der Adapter-Grundkörper (11) entlang des Umfangs der Dichtadapter-Stirnseite eine Nut (13) ausbildet, welche eingerichtet ist, das Kontur-Dichtelement (20) aufzunehmen und dieses unter Freilassung des dichtenden Kontaktbereiches (K), insbesondere formschlüssig, haltend weitgehend zu umschließen.

10. Dichtadapter (10) mit einem Kontur-Dichtelement (20) nach dem direkt vorhergehenden Anspruch 9, wobei ein Querschnitt der Nut (13) zum Aufnehmen und Halten des Kontur-Dichtelements (20) an der Dichtadapter-Stirnseite mittels zumindest einer die Freilassung verengenden Rastnase (14) auf einer Seite oder beiden Seiten der Freilassung hinterschnitten ausgeformt ist, insbesondere als ein trapezförmiger Querschnitt ausgeformt ist.

11. Dichtadapter (10) mit einem Kontur-Dichtelement (20) nach einem der vorhergehenden Ansprüche, wobei der Adapter-Grundkörper (11), insbesondere eine Grundfläche der Nut (13), entlang eines Umfangs der Dichtadapter-Stirnseite eine Konturfuß-Nut (19) ausbildet, welche eingerichtet ist, einen umfänglich ausgeformten, zu der Konturfuß-Nut (19) korrespondierenden Konturfuß (29) des eingesetzten Kontur-Dichtelements (20) aufzunehmen, insbesondere formschlüssig zu halten.

12. Dichtadapter (10) mit einem Kontur-Dichtelement (20) nach einem der vorhergehenden Ansprüche, wobei die jeweilige konvexe Ausformung des ersten Kontur-Dichtabschnitts (21) und/oder des zumindest einen zweiten Kontur-Dichtabschnitts (22), auf den Querschnitt des Kontur-Dichtelements (20) bezogen, eine im Wesentlichen runde Form; oder eine axial oder radial elongierte Form, insb. eine ovale oder rechteckige Form; oder eine freie Kontur-Form abbildet.

13. Dichtadapter (10) mit einem Kontur-Dichtelement (20) nach einem der vorhergehenden Ansprüche, wobei das Kontur-Dichtelement (20) aus einem elastischen Material, insb. einem Weich-Elastomeren, mit einer Shore-Härte A im Bereich von 55 bis 100, weiter bevorzugt von 60 bis 90, insbesondere von 70 bis 80, ausgebildet ist, wobei insbesondere der erste Kontur-Dichtabschnitt (21) eine von dem zweiten Kontur-Dichtabschnitt (22) verschiedene Shore-Härte A aufweisen kann.

14. Dichtadapter (10) mit einem Kontur-Dichtelement (20) nach einem der vorhergehenden Ansprüche, wobei das Kontur-Dichtelement aus einem elastischen Material ausgebildet ist, welches ein spritzvergießbares Material und/oder einen Thermoplasten, insbesondere ein Flüssigsilikon und/oder ein Festsilikon, umfasst.

15. Dichtadapter (10) mit einem Kontur-Dichtelement (20) nach einem der vorhergehenden Ansprüche, wobei ein Elastizitätsmodul und/oder die Shore-Härte A und/oder eine Dimensionierung des Kontur-Dichtelements (20) und/oder des zumindest einen zweiten Kontur-Dichtabschnitt (22) so adaptiert ist, dass beim Aufbringen der axialen Andruckkraft (F) in der Axialachse (z) durch die Prüf-/Trocknungseinrichtung (100) des zumindest einen zweiten Kontur-Dichtabschnitt (22) um weniger als den Axialversatz (h) komprimiert wird, insbesondere um einen maximal 80 % des Axialversatzes (h) betragenden Kompressionsweg komprimiert wird.

16. Dichtadapter (10) mit einem Kontur-Dichtelement (20) nach einem der vorhergehenden Ansprüche, wobei das Kontur-Dichtelement (20) integral und/oder einstückig mit und/oder an dem Adapter-Grundkörper ausgebildet ist, insbesondere mittels Zweikomponentenspritzguß.

17. Prüf- und/oder Trocknungseinrichtung (100) eingerichtet mit einem Dichtadapter (10) nach einem der vorstehenden Ansprüche 1 bis 16 für eine Funktionsprüfung von einer, als Hohlfaser-Filtermodul (30) ohne montierte Blutanschlusskappen (50) ausgebildeten, Filterbaugruppe (31) im Rahmen einer fertigungstechnischen Qualitätskontrolle oder dergleichen.

18. Prüf- und/oder Trocknungseinrichtung (100) nach dem direkt vorstehenden Anspruch 17, eingerichtet in Kombination mit einerseits dem Dichtadapter (10) an einer der beiden Filterbaugruppen-Stirnseiten und mit andererseits einem Konus-Dichtadapter (10') an der gegenüberliegenden anderen Filterbaugruppen-Stirnseite, wobei insbesondere die eine Filterbaugruppen-Stirnseite diejenige Filterbaugruppen-Stirnseite mit der höheren mechanischen Belastung durch die Prüf- und/oder Trocknungseinrichtung betrifft.

19. Verfahren zur Herstellung eines Hohlfaser-Filtermoduls (30) unter Verwendung einer Prüf- und/oder Trocknungseinrichtung nach einem der vorstehenden Ansprüche 17 oder 18, mit den Schritten:
- Prüfen und/oder Trocknen einer, als das Hohlfaser-Filtermodul (30) ohne montierte Blutanschlusskappen (50) ausgebildeten, Filterbaugruppe (31) in der Prüf- und/oder Trocknungseinrichtung (100); und nachfolgend
- Endmontage der Blutanschlusskappen (50) auf die Filterbaugruppe (31) zu dem fertigen Hohlfaser-Filtermodul (30).
